# EUROPÄISCHE PATENTANMELDUNG

(11) **EP 4 765 054 A1**
(43) Veröffentlichungstag der Anmeldung: **24.06.2026**
(21) Anmeldenummer: 25222048.8
(22) Anmeldetag: 10.12.2025
(51) Int. Cl.: G07C 5/00, G06Q 10/087

(54) **VERFAHREN ZUR ÜBERWACHUNG EINER BELADUNG EINES FAHRZEUGS MIT AUSRÜSTUNGSGEGENSTÄNDEN, VORRICHTUNG ZUR DATENVERARBEITUNG UND SIGNALFOLGE**

(30) Priorität: 20.12.2024 DE 102024139424
(71) Anmelder: Andreas Stihl AG & Co. KG, 71336 Waiblingen (DE)
(72) Erfinder: Lehmann, Sebastian, 71384 Weinstadt (DE); Sandbühler, Philipp, 76703 Kraichtal (DE); Kim, Hyun Young, 70329 Stuttgart (DE)

(57) **Zusammenfassung**

Vorgeschlagen wird ein Verfahren zur Überwachung einer Beladung eines Fahrzeugs (11) mit Ausrüstungsgegenständen (5, 13a, 13b), umfassend die Verfahrensschritte: a) Feststellen eines Eintritts eines ersten Ereignisses hinsichtlich einer in Bezug auf das Fahrzeug (11) definierten ersten Zustandsgröße mittels einer Erfassungseinheit (19), wobei die Erfassungseinheit (19) zum Erfassen von Funksignalen (9) eingerichtet ist, b) Prüfen auf eine Anwesenheit von Ausrüstungsgegenständen (5, 13a, 13b) mittels der Erfassungseinheit (19) als Reaktion auf den festgestellten Eintritt des ersten Ereignisses, c) Identifizieren zumindest eines als anwesend erfassten Ausrüstungsgegenstands als ein für die Beladung des Fahrzeugs (11) spezifischer Ausrüstungsgegenstand (13a, 13b), d) Feststellen eines Eintritts eines zweiten Ereignisses hinsichtlich einer in Bezug auf das Fahrzeug (11) definierten zweiten Zustandsgröße, e) Prüfen auf eine Anwesenheit zumindest des spezifischen Ausrüstungsgegenstands (13a, 13b) mittels der Erfassungseinheit als Reaktion auf den festgestellten Eintritt des zweiten Ereignisses, f) Erzeugen eines ersten Kontrollsignals in Abhängigkeit eines Ergebnisses des Prüfens auf die Anwesenheit des spezifischen Ausrüstungsgegenstands.

## Beschreibung

Die Erfindung betrifft ein Verfahren zur Überwachung einer Beladung eines Fahrzeugs mit Ausrüstungsgegenständen. Die vorliegende Erfindung betrifft auch eine Vorrichtung zur Datenverarbeitung aufweisend Mittel, die dazu eingerichtet sind, ein solches Verfahren auszuführen, und eine Signalfolge, repräsentierend Befehle, die, wenn sie auf einer Vorrichtung zur Datenverarbeitung ausgeführt werden, die Vorrichtung veranlassen, ein solches Verfahren auszuführen.

### Stand der Technik

In Unternehmen, insbesondere des Garten- und Landschaftsbau sowie in Bauunternehmen, etwa des Hoch- und Tiefbaus oder des Straßenbaus, aber auch in kommunalen Betrieben, werden häufig zu Beginn eines Arbeitstages mehrere Teams auf unterschiedliche Fahrzeuge verteilt und jeweils mit bestimmten Ausrüstungsgegenständen, wie Arbeitsgeräte, Akkupacks, mobile Stromversorgungen, Behälter mit Kraftstoffen und dergleichen mehr, für die eingeplanten Arbeitseinsätze ausgestattet.

Beim Verlassen eines Einsatzortes muss sodann durch das jeweilige Team jeweils Sorge getragen werden, dass sich sämtliche der ursprünglich an Bord des Fahrzeugs geladenen Ausrüstungsgegenstände auch wieder an Bord des Fahrzeugs befinden. Gerade wenn an einem Tag mehrere Arbeitseinsätze an unterschiedlichen Einsatzorten stattfinden, stellt die wiederholte Kontrolle der Beladung des jeweiligen Fahrzeugs mit den Ausrüstungsgegenständen einen nicht zu unterschätzenden Aufwand dar. Ferner kann es vorkommen, dass Kontrollen aufgrund von eng getakteten Terminvorgaben gelegentlich auch nur rudimentär durchgeführt werden oder sogar unterbleiben. Ungeachtet dessen werden zuverlässige Kontrollen der Beladung auch dadurch erschwert und ineffektiv, dass eine vollständige Kenntnis über die ursprüngliche Beladung des Fahrzeugs nicht immer im erforderlichen Maß gegeben ist.

Eine Folge können an einem Einsatzort zurückgelassene Ausrüstungsgegenstände sein. Dadurch werden zusätzliche Wege notwendig, um diese Ausrüstungsgegenstände nachträglich einzusammeln und/oder bereitzustellen.

### Offenbarung

Die Erfindung betrifft gemäß einem ersten Aspekt ein Verfahren zur Überwachung einer Beladung eines Fahrzeugs mit Ausrüstungsgegenständen. Das Verfahren umfasst die Verfahrensschritte:
a) Feststellen eines Eintritts eines ersten Ereignisses hinsichtlich einer in Bezug auf das Fahrzeug definierten ersten Zustandsgröße mittels einer Erfassungseinheit, wobei die Erfassungseinheit zum Erfassen von Funksignalen eingerichtet ist,
b) Prüfen auf eine Anwesenheit von Ausrüstungsgegenständen mittels der Erfassungseinheit als Reaktion auf den festgestellten Eintritt des ersten Ereignisses,
c) Identifizieren zumindest eines als anwesend erfassten Ausrüstungsgegenstands als ein für die Beladung des Fahrzeugs spezifischer Ausrüstungsgegenstand,
d) Feststellen eines Eintritts eines zweiten Ereignisses hinsichtlich einer in Bezug auf das Fahrzeug definierten zweiten Zustandsgröße,
e) Prüfen auf eine Anwesenheit zumindest des spezifischen Ausrüstungsgegenstands mittels der Erfassungseinheit als Reaktion auf den festgestellten Eintritt des zweiten Ereignisses,
f) Erzeugen eines ersten Kontrollsignals in Abhängigkeit eines Ergebnisses des Prüfens auf die Anwesenheit des spezifischen Ausrüstungsgegenstands.

Der Erfindung liegt damit die überraschende Erkenntnis zugrunde, dass der Eintritt eines ersten Ereignisses hinsichtlich einer ersten Zustandsgröße des jeweiligen Fahrzeugs ein besonders vorteilhaftes Kriterium darstellt, um bei einer Prüfung auf anwesende Ausrüstungsgegenstände diejenigen Ausrüstungsgegenstände, die sich an Bord des Fahrzeugs befinden, erfassen und insbesondere von Ausrüstungsgegenständen, die sich nicht an Bord des Fahrzeugs befinden, unterscheiden zu können.

Denn neben der bloßen Anwesenheit eines Ausrüstungsgegenstandes muss die Anwesenheit auch einen Bezug zu dem Eintritt des ersten Ereignisses insoweit haben, als in Schritt b) die Anwesenheit nach Eintritt des ersten Ereignisses festgestellt wird, damit der Ausrüstungsgegenstand als spezifischer Ausrüstungsgegenstand identifiziert wird.

Durch die Einbeziehung dieses Bezugs als zumindest implizite Zusatzinformation, kann die Datenbasis für die Entscheidung, ob ein als anwesend erfasster Ausrüstungsgegenstand als spezifischer Ausrüstungsgegenstand identifiziert wird oder nicht, mit überraschend einfachen aber dennoch effektiven Mitteln vergrößert und somit die Entscheidung im Vergleich zu herkömmlichen Verfahren zuverlässiger getroffen werden.

Durch die zumindest teilweise Einbeziehung dieser Information kann somit besonders zuverlässig eine automatisierte Erfassung von den tatsächlich an Bord des Fahrzeugs geladenen Ausrüstungsgegenständen durchgeführt und dazu ein oder mehrere spezifische Ausrüstungsgegenstände identifiziert werden.

Die Schritte a) bis c) können zumindest ein Teil eines als Erfassungsphase bezeichneten ersten Abschnitts des erfindungsgemäßen Verfahrens sein. Die Erfassungsphase kann sowohl vor als auch nach jedem Schritt jeweils weitere Teile aufweisen. Außerdem können sowohl zeitlich vor als auch zeitlich nach der Erfassungsphase weitere Teile des Verfahrens vorgesehen sein.

Insbesondere erfolgt das Feststellen des Eintritts des ersten Ereignisses in Schritt a) zu einem zweiten Zeitpunkt.

Beispielsweise könnten zu einem Zeitpunkt vor dem zweiten Zeitpunkt Ausrüstungsgegenstände als anwesend erfasst werden, die jedoch gar nicht an Bord des Fahrzeugs sind. Dies könnten Ausrüstungsgegenstände sein, die sich beispielsweise zumindest zeitweise in einem zum Abstellplatz des Fahrzeugs nahegelegenen Lagerort oder in einem benachbarten Fahrzeug befinden. Indem allerdings erst in Schritt b) und damit nicht vor dem zweiten Zeitpunkt auf die Anwesenheit der Ausrüstungsgegenstände geprüft wird, muss zunächst das erste Ereignis eingetreten sein, ehe ein Ausrüstungsgegenstand überhaupt als spezifischer Ausrüstungsgegenstand identifiziert werden kann. Durch eine geeignete Wahl der ersten Zustandsgröße kann es daher ausgeschlossen oder zumindest weniger wahrscheinlich werden, dass Ausrüstungsgegenstände, die sich nicht an Bord des Fahrzeugs befinden, (fälschlicherweise) als anwesende spezifische Ausrüstungsgegenstände identifiziert werden.

Beispielsweise kann die erste Zustandsgröße so gewählt werden, dass mit dem Eintritt des ersten Ereignisses von einer Abwesenheit von nicht spezifischen Ausrüstungsgegenständen ausgegangen werden kann und/oder dass mit dem Eintritt des ersten Ereignisses von einer Anwesenheit nur von spezifischen Ausrüstungsgegenständen ausgegangen werden kann.

Insgesamt kann dadurch erreicht werden, dass Ausrüstungsgegenstände, die sich zwar zumindest zeitweise in der Nähe des Fahrzeugs, aber nicht an Bord des Fahrzeugs befinden, nicht oder zumindest mit einer geringeren Wahrscheinlichkeit als spezifische Ausrüstungsgegenstände identifiziert werden.

In einer Ausführungsform wird in Schritt b) mittels der Erfassungseinheit funkbasiert auf die Anwesenheit von Ausrüstungsgegenständen geprüft. Indem in Schritt b) die anwesenden Ausrüstungsgegenstände vorteilhaft funkbasiert erfasst werden, können die Ausrüstungsgegenstände berührungslos erfasst werden. Dadurch können die relevanten spezifischen Ausrüstungsgegenstände im Hintergrund und auch insoweit ohne Eingriff einer Person automatisiert identifiziert werden.

Von dem zumindest einen spezifischen Ausrüstungsgegenstand kann daher vorteilhaft angenommen werden, dass sich dieser zumindest während des Schrittes b) an Bord des Fahrzeugs befindet.

Da sich keine Person aktiv um die Erfassung und Identifizierung von Ausrüstungsgegenständen kümmern muss, lässt sich das Identifizieren von spezifischen Ausrüstungsgegenständen in vorteilhafter Weise dem menschlichen Einflussfaktor und der damit verbundenen Fehleranfälligkeit entziehen oder zumindest weniger aussetzen. Dadurch kann mit höherer Verlässlichkeit eine vollständige Übersicht über die an Bord des Fahrzeugs geladenen Ausrüstungsgegenstände erhalten werden. Dadurch kann wiederum eine anschließende Kontrolle der Beladung des Fahrzeugs auf Grundlage einer vertrauenswürdigen und zuverlässigen Datenbasis stattfinden. Ein Fehlen von Ausrüstungsgegenständen an Bord des Fahrzeugs kann dabei dann mit großer Zuverlässigkeit erkannt werden.

Dadurch handelt es sich bei dem vorgeschlagenen Verfahren insbesondere um ein Verfahren zur, insbesondere zumindest teilweisen, automatisierten Überwachung einer Beladung eines Fahrzeugs mit Ausrüstungsgegenständen.

Indem zusammenfassend gesprochen also die Identifizierung eines als anwesend erfassten Ausrüstungsgegenstandes als spezifischer Ausrüstungsgegenstand zumindest davon abhängig gemacht wird, dass der Ausrüstungsgegenstand zumindest einmal in Schritt b) als anwesend erfasst wurde, kann zuverlässig erreicht werden, dass es sich bei dem erfassten Ausrüstungsgegenstand auch um einen solchen Ausrüstungsgegenstand handelt, der sich an Bord des jeweiligen Fahrzeugs befindet. Denn durch das geforderte Kriterium werden zumindest implizit Zusatz-Informationen bei der Entscheidung mit einbezogen.

Insbesondere weist das Prüfen auf die Anwesenheit von Ausrüstungsgegenständen in Schritt b) auf, dass zumindest ein Ausrüstungsgegenstand als anwesend erfasst wird.

Insbesondere wird in Schritt b) nicht durchgehend auf die Anwesenheit von Ausrüstungsgegenständen geprüft. Beispielsweise kann in gewissen Zeitabständen wiederholt die Prüfung durchgeführt werden. Dadurch kann die Effizienz gesteigert und Ressourcen geschont werden.

Insbesondere kann in Schritt b) ein Ausrüstungsgegenstand oder mehr als ein Ausrüstungsgegenstand als anwesend erfasst werden. Beispielsweise kann ein einziger Ausrüstungsgegenstand als anwesend erfasst werden oder es kann eine Vielzahl von Ausrüstungsgegenständen als anwesend erfasst werden. In jedem Fall müssen vorteilhaft nicht alle der als anwesend erfassten Ausrüstungsgegenstände in Schritt c) auch als spezifische Ausrüstungsgegenstände identifiziert werden.

Auch wenn in dieser Offenbarung teilweise lediglich von "dem" spezifischen Ausrüstungsgegenstand oder "dem zumindest einen" spezifischen Ausrüstungsgegenstand gesprochen wird, so sind damit bei mehreren spezifischen Ausrüstungsgegenstände auch diese mehreren spezifischen Ausrüstungsgegenstände gemeint, soweit sich aus dem Kontext nichts anderes ergibt.

Insbesondere können die als anwesend erfassten Ausrüstungsgegenstände alle vom selben Typ oder zumindest teilweise von einem unterschiedlichen Typ sein.

Es wurde außerdem überraschend erkannt, dass die Überwachung der Beladung des Fahrzeugs mit Ausrüstungsgegenständen weiter verbessert werden kann, indem die Schritte d) bis f) durchgeführt werden.

Insbesondere erfolgt das Feststellen des Eintritts des zweiten Ereignisses in Schritt d) zu einem vierten Zeitpunkt.

In einer Ausführungsform wird in Schritt e) mittels der Erfassungseinheit funkbasiert auf die Anwesenheit zumindest des spezifischen Ausrüstungsgegenstandes geprüft.

Die Schritte d) bis f) können zumindest ein Teil eines als Überprüfungsphase bezeichneten zweiten Abschnitts des erfindungsgemäßen Verfahrens sein. Die Überprüfungsphase kann sowohl vor als auch nach jedem Schritt jeweils weitere Teile aufweisen. Außerdem können sowohl zeitlich vor als auch zeitlich nach der Überprüfungsphase weitere Teile des Verfahrens vorgesehen sein. Die Überprüfungsphase kann sich, muss sich aber nicht, unmittelbar an die Erfassungsphase anschließen.

Im Rahmen der Überprüfungsphase kann damit vorteilhaft auf die Anwesenheit der zuvor als spezifische Ausrüstungsgegenstände identifizierte Ausrüstungsgegenstände geprüft werden. Dadurch kann auf einfache und zuverlässige Weise die Vollständigkeit der Beladung des Fahrzeugs mit Ausrüstungsgegenständen überwacht und hergestellt werden.

Insbesondere findet die Überprüfungsphase dabei nach oder mit dem Eintritt des zweiten Ereignisses in Bezug auf die zweite Zustandsgröße statt. Somit kann durch eine geeignete Wahl der zweiten Zustandsgröße ein passendes zweites Ereignis festgelegt werden, um den Start der Überprüfungsphase auszulösen.

Beispielsweise kann das zweite Ereignis sein, dass das Fahrzeug den jeweiligen Einsatzort verlässt. Somit können Fehlalarme vermieden oder zumindest reduziert werden, die auftreten würden, wenn an einem Einsatzort Ausrüstungsgegenstände bereits aus dem Fahrzeug entfernt wurden und die Erfassungseinheit anschließend wieder in die Nähe des Fahrzeugs gelangt, ohne dass der Einsatz bereits beendet wäre, etwa wenn eine Person, die die Erfassungseinheit mit sich führt, eine Mittagspause innerhalb des Fahrzeugs einlegt oder zu dem Fahrzeug zurückkehrt, um einen weiteren Ausrüstungsgegenstand aus dem bereits teilweise entladenen Fahrzeug zu holen.

Indem dem Start der Überprüfungsphase vorteilhaft eine solche (mindestens einstufige) Prüfung vorgelagert ist, kann folglich sehr zuverlässig der richtige Zeitpunkt zum Durchführen der Überprüfungsphase festgelegt und Fehlalarme vermieden werden.

Insbesondere ist das erste Kontrollsignal ein Analogsignal oder ein Digitalsignal. Das erste Kontrollsignal kann optional auf der Erfassungseinheit ausgegeben und/oder an eine andere Entität weitergeleitet werden.

Wenn der spezifische Ausrüstungsgegenstand in Schritt e) nicht als anwesend erfasst wird, kann die Erfassungseinheit eine Warnmeldung und/oder ein akustisches und/oder haptisch wahrnehmbares Warnsignal ausgeben. Beispielsweise kann eine Ausgabe und/oder Hervorhebung der fehlenden Ausrüstungsgegenstände, also diejenigen spezifischen Ausrüstungsgegenstände, die in Schritt e) nicht als anwesende Ausrüstungsgegenstände erfasst wurden, erfolgen.

Indem die Erfassungseinheit zum Erfassen von Funksignalen eingerichtet ist, ist diese vorteilhaft dazu ausgelegt, Funksignale empfangen und/oder auszuwerten zu können. Optional kann die Erfassungseinheit auch zum Aussenden von Funksignalen ausgelegt sein.

Insbesondere ist das Verfahren computer-implementiert. Dann kann das Verfahren beispielsweise als App auf einem Smartphone ausgeführt werden. Das Smartphone kann dann die Erfassungseinheit darstellen.

Insbesondere ist das Verfahren, insbesondere zumindest zeitweise oder durchgehend, ohne eine Anbindung an ein entferntes System, wie ein Backend-System und/oder Cloud-System, durchführbar. Dadurch kann das Verfahren insbesondere auch offline und somit in Regionen und/oder Situationen ausgeführt werden, bei denen keine Datenverbindung möglich ist. Dadurch kann das Verfahren sehr flexibel eingesetzt werden.

Insbesondere kann es vorgesehen sein, dass, insbesondere im Rahmen der Überprüfungsphase, für die als an Bord des Fahrzeugs anwesend erfassten Ausrüstungsgegenstände, insbesondere die als anwesend erfassten spezifischen Ausrüstungsgegenstände, weitere Informationen, insbesondere über Funksignale, anhand derer die Ausrüstungsgegenstände als anwesend erfasst werden, erhalten werden. Beispielsweise kann es sich bei den weiteren Informationen um Statusinformationen in Bezug auf den jeweiligen Ausrüstungsgegenstand handeln, wie ein Ladezustand des Akkus des jeweiligen Ausrüstungsgegenstandes.

Insbesondere kann es vorgesehen sein, insbesondere im Rahmen der Erfassungs- und/oder Überprüfungsphase, etwa beim Entnehmen eines Ausrüstungsgegenstandes aus dem Lager oder Zurückbringen eines Ausrüstungsgegenstandes in das Lager, einen Ladezustand eines Akkus des Ausrüstungsgegenstandes zu erkennen und/oder zu warnen, falls der Akku einen kritischen (insbesondere einen geringeren als einen vorgegebenen Mindestwert) Ladezustand aufweist.

Insbesondere kann das vorgeschlagene Verfahren als Teil einer, insbesondere digitalen, Lösung für ein Flottenmanagement vorgesehen sein.

Insbesondere in Unternehmen des Garten- und Landschaftsbau, in Bauunternehmen, etwa des Hoch- und Tiefbaus oder des Straßenbaus, und/oder in kommunalen Betrieben kann das Verfahren vorteilhaft eingesetzt werden. Insbesondere ist daher das Fahrzeug ein Fahrzeug eines solchen Unternehmens und/oder Betriebs.

Insbesondere wird mittels der Erfassungseinheit in Schritt b) auf die Anwesenheit von Ausrüstungsgegenständen und/oder in Schritt d) auf die Anwesenheit zumindest des spezifischen Ausrüstungsgegenstandes jeweils in einer Umgebung der Erfassungseinheit geprüft. Insbesondere wird im Sinne dieser Offenbarung unter einer "Umgebung der Erfassungseinheit" jeweils ein solcher Raumbereich um die Erfassungseinheit verstanden, innerhalb dessen sich ein auf Anwesenheit zu prüfender Ausrüstungsgegenstand befinden muss, damit dessen Anwesenheit durch die Erfassungseinheit mit den für die jeweilige Anwesenheitsprüfung eingesetzten Mitteln (etwa Sensoren) noch erfasst werden kann.

Die Ausdehnung des Raumbereichs kann durch die Erfassungseinheit und/oder durch die Ausrüstungsgegenstände jeweils zumindest teilweise bestimmt sein. So können an den Ausrüstungsgegenständen vorgesehene Mittel, die einen Beitrag zur Durchführung der Anwesenheitsprüfung leisten, die Ausdehnung des Raumbereichs beeinflussen. Daher kann die Ausdehnung des Raumbereichs für unterschiedliche zu erfassende Ausrüstungsgegenstände zumindest teilweise verschieden sein und/oder kann die Ausdehnung des Raumbereichs für einen bestimmten Ausrüstungsgegenstand einer zeitabhängigen Variation unterliegen (etwa aufgrund einer zunehmenden Erschöpfung der Energiequelle des Mittels). Weitere Faktoren, wie Umgebungsbedingungen, können ebenfalls Einfluss auf eine zeit- und/oder ortsabhängige Ausdehnung des Raumbereichs haben.

Beispielsweise können die auf Anwesenheit zu prüfenden und damit die zu erfassenden Ausrüstungsgegenstände jeweils einen Sensor umfassen, der dem jeweiligen Ausrüstungsgegenstand zugeordnet wird. Der Sensor kann ein passiver oder ein aktiver Sensor sein. Der Sensor kann zumindest zeitweise Funksignale aussenden, auf Grundlage derer der zugehörige Ausrüstungsgegenstand als anwesend erfasst werden kann, indem die ausgesendeten Funksignale empfangen und/oder ausgewertet werden. Dann kann die Erfassungseinheit durch Empfangen der Funksignale des Sensors und/oder Auswerten der empfangenen Funksignale den Ausrüstungsgegenstand basierend auf den empfangenen Funksignalen und/oder einem Ergebnis der Auswertung als anwesend erfassen. Der Sensor kann insbesondere ein induktiver Sensor, beispielsweise zum Erfassen von Betriebsstunden des entsprechenden Ausrüstungsgegenstandes, sein. Zusätzlich oder alternativ kann der Sensor vorteilhaft Teil einer übergeordneten Einheit, insbesondere einer Steuer- und/oder Geräteeinheit, sein und beispielsweise, insbesondere mittels einer elektrischen Verbindung, Betriebsdaten, wie etwa Drehzahl oder Statusinformationen, von dem jeweiligen Ausrüstungsgegenstand erfassen.

Beispielsweise kann der jeweilige Sensor dauerhaft Funksignale aussenden oder nur in Reaktion darauf, dass die Erfassungseinheit ein Funksignal aussendet, das den Sensor aktiviert und seinerseits veranlasst, ein zuvor beschriebenes Funksignal auszusenden. Daher kann unter einer "Umgebung der Erfassungseinheit" alternativ oder ergänzend auch ein solcher Raumbereich um die Erfassungseinheit verstanden werden, innerhalb dessen sich ein zu erfassender Ausrüstungsgegenstand befinden muss, damit die von der Erfassungseinheit ausgesendeten Funksignale von dem Sensor an dem Ausrüstungsgegenstand noch empfangen werden können und/oder diesen noch aktivieren können und/oder die von dem Sensor an dem Ausrüstungsgegenstand ausgesendeten Funksignale von der Erfassungseinheit noch empfangen werden können.

In einer Ausführungsform wird mittels der Erfassungseinheit in Schritt b) auf die Anwesenheit von Ausrüstungsgegenständen und/oder in Schritt e) auf die Anwesenheit zumindest des spezifischen Ausrüstungsgegenstandes jeweils funkbasiert geprüft. Wenn in dieser Offenbarung davon gesprochen wird, dass auf die Anwesenheit eines Ausrüstungsgegenstandes (oder des Fahrzeugs) funkbasiert geprüft oder dieser/dieses funkbasiert erfasst wird, so wird darunter insbesondere verstanden, dass die Funksignale eines dem jeweiligen Ausrüstungsgegenstand (oder dem Fahrzeug) zugeordneten Sensors empfangen werden .

Die oben beschriebenen "Sensoren" können den später noch näher beschriebenen "Kommunikationsschnittstellen", insbesondere in Form von Tags, entsprechen.

Ein Ausrüstungsgegenstand kann beispielsweise eine, insbesondere mobile, Vorrichtung, wie (i) ein Arbeitsgerät, (ii) ein Mittel zur Energieversorgung, etwa ein Akku, insbesondere zum Antreiben und/oder Versorgen des Arbeitsgeräts, und/oder eine mobile Stromversorgung, (iii) ein Behälter, etwa für Kraftstoffe und/oder Arbeitsmaterialien, (iv) ein Ladegerät zum Laden von Akkus, (v) ein Werkzeuganbau oder Werkzeugaufsatz für eine Motoreinheit des Arbeitsgeräts, (vi) ein nicht motorbetriebenes Werkzeug, (vii) eine Leiter, (viii) ein Gerüst, (ix) ein Gestell und/oder (x) eine persönliche Schutzausrüstung eines Nutzers des Arbeitsgeräts sein. Ein Arbeitsgerät kann ein Garten-, Forst-, Bau- und/oder Bodenbearbeitungsgerät, wie eine Säge, ein Hoch-Entaster, eine Heckenschere, ein Heckenschneider, ein Gehölzschneider, eine Astschere, ein Trennschleifer, ein Rasenmäher, eine Grasschere, ein Freischneider, ein Vertikutierer, ein Blasgerät, beispielswiese ein Laubbläser, ein Sauggerät, beispielsweise ein Laubsauger und/oder ein Reinigungsgerät, insbesondere ein Hochdruckreiniger, ein Kehrgerät, eine Kehrwalze und/oder eine Kehrbürste, eine Rüttelplatte, eine Kleinmaschine oder eine beliebige Kombination davon sein. Ein Arbeitsgerät kann alternativ oder ergänzend ein Benzin-, Elektro- oder Akku-Arbeitsgeräte sein, beispielsweise ein Akku-Gartengerät, wie eine Akku-Heckenschere. Der Ausrüstungsgegenstand kann dabei für den Einsatz in einem der zuvor genannten Unternehmen und/oder Betriebe geeignet sein.

Insbesondere befindet sich im Sinne dieser Offenbarung ein Ausrüstungsgegenstand dann als Teil der Beladung an Bord des Fahrzeugs (und ist also an Bord des Fahrzeugs geladen), wenn der Ausrüstungsgegenstand in dem Fahrzeug (etwa in einem, insbesondere offenen oder verschließbaren, Laderaum des Fahrzeugs), auf dem Fahrzeug (etwa auf dem Dach des Fahrzeugs oder einer Ladefläche des Fahrzeugs) und/oder an dem Fahrzeug (etwa am Heck des Fahrzeugs oder an einer Seite des Fahrzeugs) mitgeführt wird. Ein Ausrüstungsgegenstand befindet sich im Sinne dieser Offenbarung insbesondere auch dann als Teil der Beladung an Bord des Fahrzeugs, wenn der Ausrüstungsgegenstand in, auf und/oder an einem Anhänger und/oder in, auf und/oder an einem Sattelauflieger, der jeweils mit dem Fahrzeug verbunden ist, mitgeführt wird.

Alternativ oder ergänzend kann auch vorgesehen sein, dass das Verfahren den weiteren Verfahrensschritt umfasst: Feststellen einer Anwesenheit des Fahrzeugs, insbesondere funkbasiert, mittels der Erfassungseinheit, insbesondere in einer Umgebung der Erfassungseinheit, zeitlich vor dem Feststellen des Eintritts des ersten Ereignisses.

Dieser weitere Verfahrensschritt findet insbesondere zeitlich vor dem Schritt a) statt.

In einer Ausführungsform erfolgt das Feststellen der Anwesenheit des Fahrzeugs in diesem weiteren Verfahrensschritt zu einem ersten Zeitpunkt.

Dieser weitere Verfahrensschritt kann zumindest ein Teil der Erfassungsphase sein.

Insbesondere beginnt die Erfassungsphase mit oder nach dem ersten Zeitpunkt. Die Erfassungsphase kann aber auch bereits vor dem ersten Zeitpunkt beginnen. Andererseits kann die Erfassungsphase auch mit oder nach dem zweiten Zeitpunkt beginnen. Insbesondere fällt in jedem Fall aber der zweite Zeitpunkt in die Erfassungsphase und/oder dauert die Erfassungsphase über den zweiten Zeitpunkt hinaus an.

In einer Ausführungsform wird die Anwesenheit des Fahrzeugs mittels der Erfassungseinheit dabei funkbasiert festgestellt und/oder geprüft.

Das oben zur "Umgebung der Erfassungseinheit" in Bezug auf das Feststellen der Anwesenheit eines Ausrüstungsgegenstandes Gesagte gilt ganz entsprechend auch für die "Umgebung der Erfassungseinheit" in Bezug auf das Feststellen der Anwesenheit des Fahrzeugs, welches Fahrzeug dazu ebenfalls entsprechende Mittel (insbesondere Sensoren) aufweisen kann, wonach beispielsweise also jeweils ein solcher Raumbereich um die Erfassungseinheit verstanden werden kann, innerhalb dessen sich ein auf Anwesenheit zu prüfendes Fahrzeug befinden muss, damit dessen Anwesenheit durch die Erfassungseinheit mit den für die jeweilige Anwesenheitsprüfung eingesetzten Mitteln (etwa Sensoren) noch erfasst werden kann.

Alternativ oder ergänzend kann auch vorgesehen sein, dass das Verfahren den weiteren Verfahrensschritt umfasst: Hinterlegen einer Information über den spezifischen Ausrüstungsgegenstand in einem Ausrüstungsgegenstand-Verzeichnis als Reaktion auf das Identifizieren des für die Beladung des Fahrzeugs spezifischen Ausrüstungsgegenstands.

Dieser weitere Verfahrensschritt kann zumindest ein Teil der Erfassungsphase sein.

Das Ausrüstungsgegenstand-Verzeichnis muss somit vorteilhaft nicht manuell von einer Person angelegt werden. Stattdessen wird mit dem vorgeschlagenen Verfahren das Ausrüstungsgegenstand-Verzeichnis, insbesondere im Rahmen der Erfassungsphase, vorteilhaft automatisiert angelegt.

Das Hinterlegen einer Information in dem Ausrüstungsgegenstand-Verzeichnis wird teilweise auch als "Eintragen eines Ausrüstungsgegenstandes in das Ausrüstungsgegenstand-Verzeichnis" formuliert.

Das Hinterlegen einer Information in dem Ausrüstungsgegenstand-Verzeichnis kann beispielsweise ein automatisiertes Erstellen des Verzeichnisses umfassen.

In einer Ausführungsform werden von den in Schritt b) als anwesend erfassten Ausrüstungsgegenständen in Schritt c) mehrere Ausrüstungsgegenstände als spezifische Ausrüstungsgegenstände identifiziert und jeder der spezifischen Ausrüstungsgegenstände wird in das Ausrüstungsgegenstand-Verzeichnis eingetragen.

Ausrüstungsgegenstände, die in Schritt b) zwar als anwesende Ausrüstungsgegenstände erfasst, aber in Schritt c) nicht als spezifische Ausrüstungsgegenstände identifiziert werden (da sie beispielsweise nur zeitweise vor dem zweiten Zeitpunkt erfasst werden, aber nicht nach dem zweiten Zeitpunkt als anwesend erfasst werden), können in Ausführungsformen ebenfalls in dem Ausrüstungsgegenstand-Verzeichnis hinterlegt werden, wenngleich deren Einträge dann von Einträgen spezifischer Ausrüstungsgegenstände vorteilhaft unterschieden werden können.

Optional kann es also vorgesehen sein, dass neben den spezifischen Ausrüstungsgegenständen auch weitere Ausrüstungsgegenstände, insbesondere als anwesend erfasste aber nicht als spezifische Ausrüstungsgegenstände identifizierte Ausrüstungsgegenstände, in das Ausrüstungsgegenstand-Verzeichnis zumindest vorübergehend eingetragen werden. Dann ist vorteilhaft anhand des Ausrüstungsgegenstand-Verzeichnisses eine Unterscheidung zwischen spezifischen Ausrüstungsgegenständen und Ausrüstungsgegenständen die nicht, oder noch nicht, als spezifische Ausrüstungsgegenstände identifiziert sind möglich. Jedoch ist es nicht notwendig, dass nicht spezifische Ausrüstungsgegenstände in das Ausrüstungsgegenstand-Verzeichnis zumindest vorübergehend eingetragen werden.

Da sich vorteilhaft keine Person aktiv um die Pflege des Ausrüstungsgegenstand-Verzeichnisses kümmern muss, ist das Erstellen des Ausrüstungsgegenstand-Verzeichnisses auch in vorteilhafter Weise dem menschlichen Einflussfaktor und der damit verbundenen Fehleranfälligkeit entzogen oder zumindest weniger ausgesetzt. Dadurch kann mit höherer Verlässlichkeit eine vollständige Übersicht über die an Bord des Fahrzeugs geladenen Ausrüstungsgegenstände erhalten werden. Dadurch kann wiederum eine anschließende Kontrolle der Beladung des Fahrzeugs auf Grundlage einer vertrauenswürdigen und zuverlässigen Datenbasis stattfinden. Ein Fehlen von Ausrüstungsgegenständen an Bord des Fahrzeugs kann dabei dann mit großer Zuverlässigkeit erkannt werden. Denn der Überprüfung der Beladung des Fahrzeugs kann ein automatisiert erstelltes Ausrüstungsgegenstand-Verzeichnis mit den ursprünglich, also während der Erfassungsphase, an Bord des Fahrzeugs geladenen Ausrüstungsgegenständen, nämlich den spezifischen Ausrüstungsgegenständen, zugrunde gelegt werden.

Vorteilhaft kann beim Erstellen des Verzeichnisses implizit als weitere Information mit eingehen, dass zu dem zweiten Zeitpunkt auch das Fahrzeug bereits als anwesend festgestellt wurde.

Durch das Ausrüstungsgegenstand-Verzeichnis kann mithin eine vertrauensvolle Datenbasis geschaffen werden. Auf diese kann im Rahmen der Überprüfungsphase zurückgegriffen werden. Dadurch kann auf einfache und zuverlässige Weise die Vollständigkeit der Beladung des Fahrzeugs mit Ausrüstungsgegenständen überwacht und hergestellt werden.

Alternativ oder ergänzend kann auch vorgesehen sein, dass das Verfahren den weiteren Verfahrensschritt umfasst: Feststellen der Anwesenheit des Fahrzeugs, insbesondere funkbasiert, mittels der Erfassungseinheit, insbesondere in einer Umgebung der Erfassungseinheit, zeitlich vor dem Feststellen des Eintritts des zweiten Ereignisses.

Auf diese Weise kann vorteilhaft erreicht werden, dass die Prüfung auf die Anwesenheit des spezifischen Ausrüstungsgegenstandes erst nach erneuter Feststellung der Anwesenheit des Fahrzeugs stattfindet. Dadurch kann sichergestellt werden, dass jenes Fahrzeug anwesend ist, für dessen Beladung zuvor der spezifische Ausrüstungsgegenstand identifiziert wurde. Dies ist besonders effizient.

Dieser weitere Verfahrensschritt findet insbesondere zeitlich zwischen dem Schritt c) und dem Schritt d) statt.

In einer Ausführungsform erfolgt das erneute Feststellen der Anwesenheit des Fahrzeugs in diesem weiteren Verfahrensschritt zu einem dritten Zeitpunkt.

Dieser weitere Verfahrensschritt kann zumindest ein Teil der Überprüfungsphase sein.

Insbesondere beginnt die Überprüfungsphase mit oder nach dem dritten Zeitpunkt. Andererseits kann die Überprüfungsphase auch mit oder nach dem vierten Zeitpunkt beginnen. Insbesondere liegt der vierte Zeitpunkt zeitlich nach dem dritten Zeitpunkt.

In einer Ausführungsform wird die Anwesenheit des Fahrzeugs mittels der Erfassungseinheit dabei funkbasiert festgestellt und/oder geprüft.

Alternativ oder ergänzend kann auch vorgesehen sein, dass das Prüfen auf die Anwesenheit von Ausrüstungsgegenständen in Schritt b) aufweist, dass zumindest ein Ausrüstungsgegenstand zu zumindest einem Zeitpunkt als anwesend erfasst wird und/oder von den in Schritt b) zumindest zeitweise als anwesend erfassten Ausrüstungsgegenständen zumindest einer derjenigen Ausrüstungsgegenstände, die in Schritt b) wiederholt zu mehreren Zeitpunkten als anwesend erfasst werden, in Schritt c) als der spezifische Ausrüstungsgegenstand identifiziert wird.

Ein Ausrüstungsgegenstand wird damit also vorteilhaft erst dann als spezifischer Ausrüstungsgegenstand identifiziert, wenn er mehrfach als anwesend erfasst wurde. Ist ein Ausrüstungsgegenstand also nur zeitweise in der Umgebung der Erfassungseinheit, kann dies durch das zusätzliche Kriterium effizient und zuverlässig erkannt werden.

In einer Ausführungsform wird der in Schritt c) als spezifischer Ausrüstungsgegenstand identifizierte Ausrüstungsgegenstand auch in das Ausrüstungsgegenstand-Verzeichnis eingetragen. Hierzu kann auf die vorherigen Ausführungen zu dem entsprechenden weiteren Ausführungsschritt verwiesen werden.

Dadurch kann sehr zuverlässig erreicht werden, dass nur die an Bord des Fahrzeugs geladenen Ausrüstungsgegenstände als spezifische Ausrüstungsgegenstände identifiziert und optional in das Ausrüstungsgegenstand-Verzeichnis eingetragen werden.

Beispielsweise können damit Ausrüstungsgegenstände, die sich nicht an Bord des Fahrzeugs aber vorübergehend (etwa solange sich das Fahrzeug noch im Lager oder in der Nachbarschaft eines anderen Fahrzeugs mit Ausrüstungsgegenständen befindet) in der Umgebung der Erfassungseinheit befinden, erkannt und bei der Eintragung in das Ausrüstungsgegenstand-Verzeichnis außenvorgelassen werden.

In Ausführungsformen kann jeder in Schritt b) als anwesend erfasste Ausrüstungsgegenstand zumindest vorübergehend in das Ausrüstungsgegenstand-Verzeichnis eingetragen werden. Insbesondere werden dann jedoch von diesen Ausrüstungsgegenständen diejenigen Ausrüstungsgegenstände, die nicht als spezifische Ausrüstungsgegenstände identifiziert werden, wieder aus dem Ausrüstungsgegenstand-Verzeichnis entfernt und/oder es sind von diesen Ausrüstungsgegenständen diejenigen Ausrüstungsgegenstände, die nicht als spezifische Ausrüstungsgegenstände identifiziert werden, als solche erkennbar.

Alternativ oder ergänzend kann auch vorgesehen sein, dass das Verfahren aufweist, dass zeitlich vor dem Schritt b) mittels der Erfassungseinheit, insbesondere funkbasiert, auf die Anwesenheit von Ausrüstungsgegenständen, insbesondere in einer Umgebung der Erfassungseinheit, geprüft wird, und dabei der zumindest eine in Schritt c) als spezifischer Ausrüstungsgegenstand identifizierte Ausrüstungsgegenstand zumindest einmal als anwesend erfasst wird.

Der spezifische Ausrüstungsgegenstand kann dafür beispielsweise zeitlich zwischen Schritt a) und Schritt b), zeitlich vor dem zweiten Zeitpunkt und/oder zeitlich vor dem ersten Zeitpunkt jeweils zumindest einmal als anwesend erfasst werden.

Durch diese Zweistufigkeit kann der spezifische Ausrüstungsgegenstand besonders zuverlässig identifiziert werden. Denn dessen Anwesenheit muss nicht nur in Schritt b) erfasst werden, sondern zudem auch noch zu mindestens einem früheren Zeitpunkt.

In Ausführungsformen kann ein spezifischer Ausrüstungsgegenstand von einem anderen (nicht spezifischen) Ausrüstungsgegenstand dadurch unterschieden werden, dass der spezifische Ausrüstungsgegenstand alle von einem oder mehreren Kriterien erfüllt, welche Kriterien beispielsweise sind, dass (i) der jeweilige Ausrüstungsgegenstand zu zumindest einem Zeitpunkt, der nach dem zweiten Zeitpunkt und/oder nicht vor dem zweiten Zeitpunkt liegt, als ein anwesender Ausrüstungsgegenstand erfasst wird, insbesondere zu mehreren Zeitpunkten, (ii) der jeweilige Ausrüstungsgegenstand zu zumindest einem Zeitpunkt, der nach dem ersten Zeitpunkt und vor dem zweiten Zeitpunkt liegt, als anwesend erfasst wird, insbesondere zu mehreren Zeitpunkten, und/oder (iii) der jeweilige Ausrüstungsgegenstand nach dem zweiten Zeitpunkt mehrmals als anwesender Ausrüstungsgegenstand erfasst wird. Insbesondere erfüllt demgegenüber ein anderer (nicht spezifischer) Ausrüstungsgegenstand wenigstens eines der jeweils geltenden Kriterien nicht.

Alternativ oder ergänzend kann auch vorgesehen sein, dass in Schritt b) mittels der Erfassungseinheit, insbesondere funkbasiert, insbesondere in periodischen Abständen, wiederholt, insbesondere jeweils wenn sich eine Position des Fahrzeugs um einen vordefinierten Wert seit der letzten Prüfung verändert hat, auf die Anwesenheit von Ausrüstungsgegenständen, insbesondere in einer Umgebung der Erfassungseinheit, geprüft wird.

Durch eine wiederholte Prüfung kann beispielsweise auch bei einer vorübergehenden Beeinträchtigung des Funkkanals eine zuverlässige Erfassung der anwesenden Ausrüstungsgegenstände erreicht werden. Eine periodische Überprüfung ist einfach und dennoch zuverlässig. Beispielsweise kann in Schritt b) die Prüfung alle X Sekunden (zum Beispiel alle 10, 20, 30, 40, 50, 60, 120 Sekunden oder mehr) für jeweils Y Sekunden (zum Beispiel für 10, 20, 30, 40, 50, 60, 120 Sekunden oder mehr) durchgeführt werden.

Indem eine Prüfung wiederholt wird, nachdem sich die Fahrzeugposition seit der letzten Prüfung (insbesondere deren Start und/oder Ende) um einen vordefinierten Wert verändert hat, kann sehr zuverlässig erreicht werden, dass nur an Bord geladene Ausrüstungsgegenstände als spezifische Ausrüstungsgegenstände identifiziert werden. Damit ein zumindest vorübergehend als anwesend erkannter Ausrüstungsgegenstand auch als spezifischer Ausrüstungsgegenstand identifiziert wird, kann beispielsweise (zusätzlich zu den weiteren Kriterien) verlangt werden, dass dieser in 50 % oder mehr als 50 %, etwa 60 % oder mehr, 70 % oder mehr, 80 % oder mehr, 90 % oder mehr oder 95 % oder mehr, der, insbesondere nach dem zweiten Zeitpunkt durchgeführten, Prüfungen als anwesender Ausrüstungsgegenstand erfasst wird.

Alternativ oder ergänzend kann auch vorgesehen sein, dass in Schritt c) das Identifizieren des spezifischen Ausrüstungsgegenstandes zumindest teilweise basierend auf einer Auswertung einer Signalstärke eines Funksignals durchgeführt wird, wobei insbesondere ein, insbesondere als anwesend erfasster, Ausrüstungsgegenstand nicht als spezifischer Ausrüstungsgegenstand identifiziert wird, wenn das Funksignal in Schritt b) eine Signalstärke geringer als ein unterer Grenzwert aufweist.

Das Funksignal kann beispielsweise von dem jeweiligen Ausrüstungsgegenstand ausgesendet werden, etwa so, wie dies oben exemplarisch beschrieben wurde.

In einer Ausführungsform wird bei einer zu geringen Signalstärke der als anwesend erfasste Ausrüstungsgegenstand nicht als spezifischer Ausrüstungsgegenstand identifiziert und auch nicht in das Ausrüstungsgegenstand-Verzeichnis eingetragen. Optional kann ein solcher Ausrüstungsgegenstand aber als ein als anwesend erfasster Ausrüstungsgegenstand in das Ausrüstungsgegenstand-Verzeichnis eingetragen werden, beispielswiese mit einer entsprechenden Kennzeichnung. Hierzu kann auf die vorherigen Ausführungen verwiesen werden.

Dadurch kann sehr zuverlässig erreicht werden, dass nur die an Bord des Fahrzeugs geladenen Ausrüstungsgegenstände als spezifische Ausrüstungsgegenstände identifiziert und optional in das Ausrüstungsgegenstand-Verzeichnis eingetragen werden.

Beispielsweise können damit Ausrüstungsgegenstände, die sich nicht an Bord des Fahrzeugs aber in der Umgebung der Erfassungseinheit befinden, anhand einer Signalstärke, die unter dem unteren Grenzwert liegt, erkannt und bei der Identifizierung als spezifische Ausrüstungsgegenstände und/oder der Eintragung in das Ausrüstungsgegenstand-Verzeichnis außenvorgelassen werden.

Alternativ oder ergänzend kann auch vorgesehen sein, dass ein, insbesondere zumindest zeitweise als anwesend erfasster, Ausrüstungsgegenstand nicht als spezifischer Ausrüstungsgegenstand identifiziert wird, wenn ein Funksignal in Schritt b) für eine Dauer größer als und/oder gleich wie ein definierter unterer Grenzwert nicht empfangen wird.

Das Funksignal kann beispielsweise von dem jeweiligen Ausrüstungsgegenstand ausgesendet werden, etwa so, wie dies oben exemplarisch beschrieben wurde.

In einer Ausführungsform wird bei einer zu langen andauernden Unterbrechung des Funksignals des jeweiligen Ausrüstungsgegenstandes, dieser Ausrüstungsgegenstand, auch wenn er zeitweise als anwesend erfasst wurde, nicht als spezifischer Ausrüstungsgegenstand in das Ausrüstungsgegenstand-Verzeichnis eingetragen. Optional kann ein solcher Ausrüstungsgegenstand aber als ein als anwesend erfasster Ausrüstungsgegenstand in das Ausrüstungsgegenstand-Verzeichnis eingetragen werden, beispielswiese mit einer entsprechenden Kennzeichnung, dass dieser nicht immer als anwesend erfasst wurde.

Dadurch kann sehr zuverlässig erreicht werden, dass nur die an Bord des Fahrzeugs geladenen Ausrüstungsgegenstände als spezifische Ausrüstungsgegenstände identifiziert und optional in das Ausrüstungsgegenstand-Verzeichnis eingetragen werden.

Beispielsweise können damit Ausrüstungsgegenstände, die sich nur vorübergehend in der Umgebung der Erfassungseinheit befinden, erkannt und bei der Identifizierung als spezifische Ausrüstungsgegenstände und/oder der Eintragung in das Ausrüstungsgegenstand-Verzeichnis außenvorgelassen werden.

Beispielsweise kann ein Ausrüstungsgegenstand dann nicht als spezifischer Ausrüstungsgegenstand identifiziert und/oder in das Ausrüstungsgegenstand-Verzeichnis eingetragen werden, wenn dessen Funksignal in Schritt b) für eine Dauer von mindestens 10 Sekunden, 20 Sekunden, 30 Sekunden, 60 Sekunden oder 120 Sekunden nicht empfangen wird.

Alternativ oder ergänzend kann auch vorgesehen sein, dass in Schritt c) das Identifizieren des spezifischen Ausrüstungsgegenstandes zumindest teilweise basierend auf einer Auswertung eines Signalinhalts eines Funksignals durchgeführt wird, wobei insbesondere ein, insbesondere als anwesend erfasster, Ausrüstungsgegenstand nicht als spezifischer Ausrüstungsgegenstand identifiziert wird, wenn der Signalinhalt des Funksignals in Schritt b) nicht einem definierten Schema entspricht.

Das Funksignal kann beispielsweise von dem jeweiligen Ausrüstungsgegenstand ausgesendet werden, etwa so, wie dies oben exemplarisch beschrieben wurde.

In einer Ausführungsform wird bei einem abweichenden Schema der als anwesend erfasste Ausrüstungsgegenstand nicht als spezifischer Ausrüstungsgegenstand in das Ausrüstungsgegenstand-Verzeichnis eingetragen. Optional kann ein solcher Ausrüstungsgegenstand aber als ein als anwesend erfasster Ausrüstungsgegenstand in das Ausrüstungsgegenstand-Verzeichnis eingetragen werden, beispielswiese mit einer entsprechenden Kennzeichnung.

Beispielsweise kann das Funksignal eines jeden zu erfassenden Ausrüstungsgegenstandes eine Kennung des jeweiligen Ausrüstungsgegenstandes kodieren und eine vorbekannte Struktur aufweisen (beispielsweise eine Hexadezimal-Zeichenfolge der Länge 10, etwa A1B2D3E4F5). Wenn in dem Funksignal das definierte Schema (etwa 10 Zeichen aus dem Zeichenvorrat 0-9, A-F) nicht erkannt werden kann, wird dieses nicht als ein von einem zu erfassenden Ausrüstungsgegenstand kommendes Funksignal angesehen. Entsprechend wird auch kein damit verbundener spezifischer Ausrüstungsgegenstand identifiziert und/oder in das Ausrüstungsgegenstand-Verzeichnis eingetragen.

Dadurch können vorteilhaft Ausrüstungsgegenstände, die nicht bekannt sind, aussortiert werden oder unberücksichtigt bleiben.

Alternativ oder ergänzend kann auch vorgesehen sein, dass das Hinterlegen der Information über den spezifischen Ausrüstungsgegenstand in dem Ausrüstungsgegenstand-Verzeichnis das Vornehmen eines neuen Eintrages und/oder das Ergänzen und/oder Aktualisieren eines bestehenden Eintrages zu dem spezifischen Ausrüstungsgegenstand in dem Ausrüstungsgegenstand-Verzeichnis aufweist, wobei insbesondere der Eintrag Informationen bezüglich der Anwesenheit des spezifischen Ausrüstungsgegenstandes, eine Kennung des spezifischen Ausrüstungsgegenstandes und/oder ein Zeitpunkt der Erfassung der Anwesenheit des spezifischen Ausrüstungsgegenstandes aufweist.

Insbesondere ist aufgrund des, insbesondere im Rahmen der Erfassungsphase, vorgenommenen Eintragens des identifizierten spezifischen Ausrüstungsgegenstandes in das Ausrüstungsgegenstand-Verzeichnis anschließend, insbesondere im Rahmen der Überprüfungsphase, der zumindest eine als spezifischer Ausrüstungsgegenstand identifizierte Ausrüstungsgegenstand in dem Ausrüstungsgegenstand-Verzeichnis ermittelbar.

Die in dem Ausrüstungsgegenstand-Verzeichnis eingetragene Kennung kann beispielsweise in dem empfangenen Funksignal des jeweiligen Ausrüstungsgegenstandes kodiert sein.

Alternativ oder ergänzend kann auch vorgesehen sein, dass der Schritt e) aufweist, dass mittels der Erfassungseinheit, insbesondere funkbasiert, auf die Anwesenheit wenigstens des in Schritt c) identifizierten spezifischen Ausrüstungsgegenstandes und/oder wenigstens der in dem Ausrüstungsgegenstand-Verzeichnis eingetragenen spezifischen Ausrüstungsgegenstände, insbesondere in einer Umgebung der Erfassungseinheit, geprüft wird, wobei insbesondere jeder dabei als nicht anwesend festgestellte spezifischer Ausrüstungsgegenstand als fehlender Ausrüstungsgegenstand identifiziert wird und/oder das in Schritt f) erzeugte erste Kontrollsignal indikativ ist für den oder die fehlenden Ausrüstungsgegenstände.

Dadurch ist das Verfahren sehr effizient betreibbar, denn es muss gezielt nur auf die Anwesenheit der zuvor identifizierten spezifischen Ausrüstungsgegenstände geprüft werden.

Alternativ oder ergänzend kann auch vorgesehen sein, dass der Schritt e) aufweist, dass mittels der Erfassungseinheit, insbesondere funkbasiert, auf die Anwesenheit von Ausrüstungsgegenständen, insbesondere in einer Umgebung der Erfassungseinheit, geprüft wird, und von den dabei als anwesend erfassten Ausrüstungsgegenständen zumindest ein Ausrüstungsgegenstand, der zu einem Zeitpunkt, der zeitlich nach dem Feststellen des Eintritts des zweiten Ereignisses liegt, oder wiederholt zu mehreren Zeitpunkten, von denen zumindest einer zeitlich nach dem Feststellen des Eintritts des zweiten Ereignisses liegt, als anwesend erfasst wird, als ein detektierter Ausrüstungsgegenstand erfasst wird, wobei insbesondere alle dabei als detektiert erfasste Ausrüstungsgegenstände gegen die in dem Ausrüstungsgegenstand-Verzeichnis eingetragenen spezifischen Ausrüstungsgegenstände und/oder in Schritt c) als spezifische Ausrüstungsgegenstände identifizierte Ausrüstungsgegenstände geprüft werden, und dadurch die zuvor in Schritt c) als spezifische Ausrüstungsgegenstände identifizierten aber nicht als detektierte Ausrüstungsgegenstände erfassten Ausrüstungsgegenstände als fehlende Ausrüstungsgegenstände identifiziert werden, wobei insbesondere das in Schritt f) erzeugte erste Kontrollsignal indikativ ist für die fehlenden Ausrüstungsgegenstände.

Dadurch ist das Verfahren sehr zuverlässig betreibbar, da alle in der Umgebung erfassbaren Ausrüstungsgegenstände einbezogen werden.

Beispielsweise kann somit ein Verzeichnis im Rahmen der Überprüfungsphase von den währenddessen als anwesend erfassten Ausrüstungsgegenstände erstellt werden, das gegen das im Rahmen der Erfassungsphase erstellte Ausrüstungsgegenstand-Verzeichnis geprüft wird.

Dabei kann das Gegen-Prüfen von zwei Verzeichnissen ein Abgleichen aufweisen, bei dem die spezifischen Ausrüstungsgegenstände erkannt werden.

Alternativ oder ergänzend kann auch vorgesehen sein, dass in Schritt f) das erste Kontrollsignal erzeugt wird, wenn der spezifische Ausrüstungsgegenstand nicht als anwesend erfasst wird und/oder in Schritt f) ein zweites Kontrollsignal erzeugt wird, wenn der spezifische Ausrüstungsgegenstand als anwesend und/oder als detektiert erfasst wird.

Insbesondere ist das zweite Kontrollsignal ein Analogsignal oder ein Digitalsignal. Das zweite Kontrollsignal kann optional auf der Erfassungseinheit ausgegeben und/oder an die andere Entität weitergeleitet werden.

Das zweite Kontrollsignal kann den als anwesend und/oder als detektiert erfassten spezifischen Ausrüstungsgegenstand repräsentieren.

Falls mehrere spezifische Ausrüstungsgegenstände in dem Ausrüstungsgegenstand-Verzeichnis eingetragen sind, wird das zweite Kontrollsignal insbesondere entsprechend dann erzeugt, wenn alle spezifischen Ausrüstungsgegenstände als anwesend und/oder als detektiert erfasst wurden.

Alternativ oder ergänzend kann auch vorgesehen sein, dass in Schritt e) der spezifische Ausrüstungsgegenstand nicht als anwesend erfasst wird, wenn dieser innerhalb eines definierten Zeitraums nicht als anwesender und/oder detektierter Ausrüstungsgegenstand erfasst wird.

Dadurch kann das Verfahren besonders effizient betrieben werden. Denn nach dem definierten Zeitraum kann durch ein Timeout die Nicht-Anwesenheit des spezifischen Ausrüstungsgegenstandes festgestellt werden.

Insbesondere kann der nicht als anwesend und/oder detektiert erfasste Ausrüstungsgegenstand als fehlender Ausrüstungsgegenstand identifiziert werden.

Der definierte Zeitraum kann beispielsweise 10 Sekunden oder länger, 20 Sekunden oder länger, 30 Sekunden oder länger, 40 Sekunden oder länger, 50 Sekunden oder länger, 60 Sekunden oder länger oder 120 Sekunden oder länger sein.

Alternativ oder ergänzend kann auch vorgesehen sein, dass das, insbesondere funkbasierte, Prüfen auf die Anwesenheit von Ausrüstungsgegenständen, insbesondere in einer Umgebung der Erfassungseinheit, mittels der Erfassungseinheit in Schritt b) und/oder in Schritt e) jeweils aufweist, von Kommunikationsschnittstellen, die von den zu erfassenden Ausrüstungsgegenständen umfasst, an diesen vorgesehen und/oder diesen zugeordnet sind, insbesondere jeweils aufweisend oder darstellend einen Bluetooth-fähigen Chip und/oder einen RFID-Transponder, ausgesendeten Funksignalen mittels der Erfassungseinheit zu empfangen und/oder auszuwerten.

Wenngleich das Prüfen hier allgemein beschrieben und in diesem Zusammenhang daher auch allgemein von "Kommunikationsschnittstellen" gesprochen wird, kann in Ausführungsformen auch speziell die Kommunikationsschnittstelle des in Schritt c) als spezifischen Ausrüstungsgegenstand identifizierten Ausrüstungsgegenstandes gemeint sein, und daher auch speziell deren ausgesendeten Funksignale empfangen und/oder ausgewertet werden.

In jedem Fall kann eine Kommunikationsschnittstelle dabei beispielsweise jeweils in Form eines Tags ausgestaltet oder von diesem aufgewiesen sein. Der Tag kann in Form des weiter oben bereits beschriebenen Sensors ausgebildet sein. Solche Tags sind besonders einfach einsetzbar und effektiv in der Anwendung und daher sehr vorteilhaft.

Beispielsweise kann jeder Tag eine individuelle, einmalige Kennung für einen Ausrüstungsgegenstand bereitstellen, die beispielsweise aus dem empfangenen Funksignal im Rahmen der Auswertung dekodiert wird. Anhand der Kennung kann beispielsweise auch festgestellt werden, dass es sich um eine Kennung eines Ausrüstungsgegenstandes handelt.

Die von den Tags ausgesendeten Funksignale können beispielsweise in Reaktion auf ein Aktivierungssignal, das beispielsweise von der Erfassungseinheit per Funk ausgesendet wird, empfangen werden. Dies ist speziell bei einem Tag in Form eines passiven RFID-Transponders vorteilhaft.

Wenn in dieser Offenbarung davon gesprochen wird, dass Funksignale eines Ausrüstungsgegenstandes empfangen werden, so ist damit insbesondere das von der Kommunikationsschnittstelle des jeweiligen Ausrüstungsgegenstandes ausgesendete Funksignal gemeint.

Das empfangene Funksignal kann beispielsweise ein GPS- und/oder Bluetooth-Signal sein.

Ein Ausrüstungsgegenstand kann beispielsweise dann als anwesend erfasst werden, wenn wenigstens das Kriterium erfüllt ist, dass ein Funksignal von dem jeweiligen Ausrüstungsgegenstand empfangen wird. Optional können jedoch noch ein oder mehrere weitere Kriterien hinzukommen, damit ein Ausrüstungsgegenstand als anwesend erfasst wird, wie dies insbesondere oben erläutert wurde.

Alternativ oder ergänzend kann auch vorgesehen sein, dass das Feststellen der Anwesenheit des Fahrzeugs, insbesondere in einer Umgebung der Erfassungseinheit, mittels der Erfassungseinheit funkbasiert erfolgt und/oder das, insbesondere funkbasierte, Feststellen der Anwesenheit des Fahrzeugs, insbesondere in einer Umgebung der Erfassungseinheit, mittels der Erfassungseinheit jeweils aufweist, von zumindest einem an dem Fahrzeug vorgesehenen, von diesem aufgewiesenen und/oder diesem zugeordneten Tag, insbesondere aufweisend oder darstellend einen Bluetooth-fähigen Chip und/oder einen RFID-Transponder, ausgesendeten Funksignalen mittels der Erfassungseinheit zu empfangen und/oder auszuwerten.

Der Tag kann in Form des weiter oben bereits beschriebenen Sensors ausgebildet sein. Solche Tags sind besonders einfach einsetzbar und effektiv in der Anwendung und daher sehr vorteilhaft.

Beispielsweise kann der Tag eine individuelle, einmalige Kennung für das Fahrzeug bereitstellen, die beispielsweise aus dem empfangenen Funksignal im Rahmen der Auswertung dekodiert wird. Anhand der Kennung kann beispielsweise auch festgestellt werden, dass es sich um eine Kennung eines Fahrzeugs handelt. Daher kann die Anwesenheit des Fahrzeugs vorteilhaft durch Auswerten des empfangenen Funksignals festgestellt werden.

Die von den Tags ausgesendeten Funksignale können beispielsweise in Reaktion auf ein Aktivierungssignal, das beispielsweise von der Erfassungseinheit per Funk ausgesendet wird, empfangen werden. Dies ist speziell bei einem Tag in Form eines passiven RFID-Transponder vorteilhaft.

Wenn in dieser Offenbarung davon gesprochen wird, dass Funksignale eines Fahrzeugs empfangen werden, so ist damit insbesondere das von dem Tag des jeweiligen Fahrzeugs ausgesendete Funksignal gemeint.

Alternativ oder ergänzend kann auch vorgesehen sein, dass der in Schritt a) festgestellte Eintritt des ersten Ereignisses hinsichtlich der in Bezug auf das Fahrzeug definierten ersten Zustandsgröße ist, dass ein Wert der ersten Zustandsgröße einen ersten spezifischen Wert aufweist oder diesem entspricht, überschreitet und/oder unterschreitet.

Dadurch kann vorteilhaft sehr einfach durch Überwachen des Verlaufs der ersten Zustandsgröße der Eintritt des ersten Ereignisses festgestellt werden.

Alternativ oder ergänzend kann auch vorgesehen sein, dass die in Bezug auf das Fahrzeug definierte erste Zustandsgröße (i) eine Veränderung der Position des Fahrzeugs gegenüber einer zu einem Referenzzeitpunkt, wie einem Zeitpunkt, zu dem die Anwesenheit des Fahrzeugs festgestellt wird, bestehenden Position des Fahrzeugs ist, und der in Schritt a) festgestellte Eintritt des ersten Ereignisses es ist, dass sich die Position des Fahrzeugs um wenigstens den ersten spezifischen Wert verändert hat; (ii) ein Betriebszustand eines Motors des Fahrzeugs ist, und der in Schritt a) festgestellte Eintritt des ersten Ereignisses es ist, dass der Motor des Fahrzeugs gestartet wird; und/oder (iii) eine zurückgelegte Distanz des Fahrzeuges seit einem Referenzzeitpunkt, wie dem Zeitpunkt, zu dem die Anwesenheit des Fahrzeugs festgestellt wird, ist, und der in Schritt a) festgestellte Eintritt des ersten Ereignisses es ist, dass die zurückgelegte Distanz dem ersten spezifischen Wert entspricht oder diesen überschreitet.

Dabei kann der Zeitpunkt, zu dem die Anwesenheit des Fahrzeugs festgestellt wird, gerade der erste Zeitpunkt sein.

Indem als erste Zustandsgröße die Veränderung der Fahrzeugposition gewählt wird, kann besonders zuverlässig erreicht werden, dass Ausrüstungsgegenstände, die nur vorübergehend in der Umgebung der Erfassungseinheit sind, etwa wenn sich das Fahrzeug in einem Ausrüstungsgegenstände-Lager oder in der Nachbarschaft eines anderen Fahrzeugs mit Ausrüstungsgegenständen an Bord (etwa im Stau oder bei der Ausfahrt von dem Unternehmensgelände) befindet, nicht als spezifische Ausrüstungsgegenstände identifiziert werden. Dadurch kann zuverlässig erreicht werden, dass nur die an Bord geladenen Ausrüstungsgegenstände als spezifische Ausrüstungsgegenstände identifiziert und optional in das Ausrüstungsgegenstand-Verzeichnis eingetragen werden.

Eine aktuelle Position des Fahrzeugs kann beispielsweise anhand empfangener GPS-Signale ermittelt werden. Dazu kann die Erfassungseinheit vorteilhaft einen GPS-Sensor aufweisen, mit dem die GPS-Signale empfangen werden. Dann kann die aktuelle Position mit der zu dem Referenzzeitpunkt bestehenden Referenzposition des Fahrzeugs verglichen werden.

In einer Ausführungsform wird eine Position des Fahrzeugs zu dem Referenzzeitpunkt als Referenzposition ermittelt. Gegenüber dieser kann anschließend die Veränderung der Fahrzeugposition überwacht werden. Dadurch ist es einfach möglich, in Schritt a) den Eintritt des ersten Ereignisses festzustellen. Beispielsweise kann die Referenzposition auf gleiche Weise wie die aktuelle Fahrzeugposition ermittelt werden. Es ist auch möglich, dass als Referenzposition eine vordefinierte Position (beispielsweise ein Unternehmensstandort) verwendet wird. Damit ist die Positionsinformation leicht verfügbar, und zwar insbesondere auch an Orten, an denen zum Referenzzeitpunkt keine Ortsinformationen (etwa per GPS) zur Verfügung stehen. Dies macht einen besonders zuverlässigen Betrieb des Verfahrens möglich.

Indem als erste Zustandsgröße der Betriebszustand des Motors des Fahrzeugs gewählt wird, kann besonders zuverlässig erreicht werden, dass die spezifischen Ausrüstungsgegenstände erst dann als solche identifiziert werden, wenn das Fahrzeug vollständig beladen ist. Denn durch passende Wahl des ersten Ereignisses (beispielsweise der Start des Motors) kann dann mit hoher Sicherheit davon ausgegangen werden, dass der Beladungsvorgang abgeschlossen ist.

Beispielsweise kann der Betriebszustand des Motors und damit die erste Zustandsgröße von einer separaten Einheit empfangen werden, die insbesondere an und/oder in dem Fahrzeug angeordnet ist. Beispielsweise kann diese Einheit ein induktiver Sensor, ein Schwingungssensor oder eine Steuereinheit des Fahrzeugs, insbesondere des Motors, sein.

In Ausführungsformen kann als erste Zustandsgröße auch eine von der Veränderung der Position des Fahrzeugs abgeleitete Größe, wie eine Geschwindigkeit des Fahrzeugs (beispielsweise könnte der Eintritt des ersten Ereignisses sein, dass das Fahrzeug einen Geschwindigkeits-Schwellenwert überschreitet) und/oder eine Beschleunigung des Fahrzeugs (beispielsweise könnte der Eintritt des ersten Ereignisses sein, dass das Fahrzeug einen Beschleunigungs-Schwellenwert überschreitet), definiert werden.

Alternativ oder ergänzend kann auch vorgesehen sein, dass die zweite Zustandsgröße identisch mit der ersten Zustandsgröße ist und/oder der in Schritt d) festgestellte Eintritt des zweiten Ereignisses hinsichtlich der in Bezug auf das Fahrzeug definierten zweiten Zustandsgröße es ist, dass ein Wert der zweiten Zustandsgröße einen zweiten spezifischen Wert aufweist oder diesem entspricht, überschreitet und/oder unterschreitet.

Identische erste und zweite Zustandsgrößen machen die Implementierung des Verfahrens sehr effizient. Vorteilhaft sind auch die spezifischen Werte für die identischen erste und zweite Zustandsgrößen identisch. Alternativ oder ergänzend können die spezifischen Werte unterschiedlich sein.

Alternativ oder ergänzend kann auch vorgesehen sein, dass die in Bezug auf das Fahrzeug definierte zweite Zustandsgröße (i) eine Veränderung der Position des Fahrzeugs gegenüber einer zu einem Referenzzeitpunkt, wie einem Zeitpunkt, zu dem die Anwesenheit des Fahrzeugs, insbesondere erneut, festgestellt wird, bestehenden Position des Fahrzeugs ist, und der in Schritt d) festgestellte Eintritt des zweiten Ereignisses es ist, dass sich die Position des Fahrzeugs um wenigstens den zweiten spezifischen Wert verändert hat; (ii) ein Betriebszustand eines Motors des Fahrzeugs ist, und der in Schritt d) festgestellte Eintritt des zweiten Ereignisses es ist, dass der Motor des Fahrzeugs gestartet wird; und/oder (iii) eine zurückgelegte Distanz des Fahrzeuges seit einem Referenzzeitpunkt, wie dem Zeitpunkt, zu dem die Anwesenheit des Fahrzeugs, insbesondere erneut, festgestellt wird, ist, und der in Schritt d) festgestellte Eintritt des zweiten Ereignisses es ist, dass die zurückgelegte Distanz dem zweiten spezifischen Wert entspricht oder diesen überschreitet.

Hierbei gilt das oben zur ersten Zustandsgröße Gesagte ganz entsprechend.

Dabei kann der Zeitpunkt, zu dem die Anwesenheit des Fahrzeugs festgestellt wird, gerade der dritte Zeitpunkt sein.

Auch hier wird in einer Ausführungsform eine Position des Fahrzeugs zu dem Referenzzeitpunkt als Referenzposition ermittelt. Es ist ebenfalls möglich, dass als Referenzposition eine vordefinierte Position verwendet wird. Diese Referenzposition kann beispielsweise eine Ortsinformation in Bezug auf einen Einsatzort sein und/oder von einem Terminplanungssystem empfangen werden. Insbesondere kann diese Ortsinformation aus einem Speicher der Erfassungseinheit abgerufen werden, wodurch diese einfach zur Verfügung steht.

Die beschriebene separate Einheit kann auch für die Bereitstellung der zweiten Zustandsgröße eingesetzt werden.

In Ausführungsformen kann als zweite Zustandsgröße auch eine von der Veränderung der Position des Fahrzeugs abgeleitete Größe, wie eine Geschwindigkeit des Fahrzeugs (beispielsweise könnte der Eintritt des zweiten Ereignisses sein, dass das Fahrzeug einen Geschwindigkeits-Schwellenwert überschreitet) und/oder eine Beschleunigung des Fahrzeugs (beispielsweise könnte der Eintritt des zweiten Ereignisses sein, dass das Fahrzeug einen Beschleunigungs-Schwellenwert überschreitet), definiert werden.

Alternativ oder ergänzend kann auch vorgesehen sein, dass die Erfassungsphase in Reaktion auf das Feststellen der Anwesenheit des Fahrzeugs und/oder in Reaktion auf das Feststellen des Eintritts des ersten Ereignisses begonnen wird.

Dadurch kann die Erfassungsphase zeitlich effizient begonnen werden. Dies spart Ressourcen. Denn das Prüfen auf anwesende Ausrüstungsgegenstände muss erst dann begonnen werden, wenn der erste und/oder zweite Zeitpunkt erreicht ist.

Es versteht sich, dass vorteilhaft die Anwesenheit des Fahrzeugs zum ersten Zeitpunkt bereits festgestellt wurde, wenn das zweite Ereignis zu dem zweiten Zeitpunkt festgestellt wird.

Alternativ oder ergänzend kann auch vorgesehen sein, dass die Erfassungseinheit ein mobiles Endgerät, wie ein Smartphone, ist und/oder die Erfassungseinheit einen GPS-Sensor aufweist und damit GPS-Positionsinformationen empfangen werden und/oder eine Funkschnittstelle aufweist und damit Funksignale der Ausrüstungsgegenstände und/oder des Fahrzeugs jeweils empfangen werden und/oder Funksignale an die Ausrüstungsgegenstände und/oder das Fahrzeug jeweils ausgesendet werden.

Die Funkschnittstelle kann je nach eingesetzter Kommunikationsschnittstelle und/oder Tag (Sensor) passend ausgebildet sein. Beispielsweise können darüber Bluetooth-Signale und/oder RFID-Transponder-Signale gesendet und/oder empfangen werden.

Es versteht sich von selbst, was auch bereits weiter oben angemerkt wurde, dass unter den "Funksignalen der Ausrüstungsgegenstände" oder den "Funksignalen des Fahrzeugs" insbesondere die Funksignale der jeweiligen Kommunikationsschnittstellen und/oder Tags (Sensoren) verstanden wird.

Die Erfassungseinheit weist insbesondere auch einen Speicher auf, in dem das Ausrüstungsgegenstand-Verzeichnis gespeichert oder speicherbar ist und/oder abgespeichert wird.

Alternativ oder ergänzend kann auch vorgesehen sein, dass das Fahrzeug ein Kraftfahrzeug, ein Lastkraftwagen, ein Transporter und/oder ein Fahrrad, wie ein Zweirad oder Dreirad, insbesondere ein Lastenfahrrad, ist.

Das Verfahren ist damit besonders universell im Zusammenspiel mit einer Vielzahl von verschiedenen Fahrzeugen einsetzbar.

Alternativ oder ergänzend kann vorgesehen sein, dass das Verfahren mit Land-, Luft- und/oder Wasserfahrzeugen eingesetzt wird. Dabei kann das Verfahren zur Überwachung der Beladung der Fahrzeuge und/oder zur Überwachung einer entnehmbaren Vorrichtung der Land-, Luft- und/oder Wasserfahrzeuge eingesetzt werden. Eine entnehmbare Vorrichtung kann vor Beginn der Überwachung dem Fahrzeug entnommen werden. Als von dem Fahrzeug entnehmbare Vorrichtungen können beispielsweise Container, Transportkisten und/oder Ladekoffer vorgesehen sein.

In einem zweiten Aspekt der Erfindung wird eine Vorrichtung zur Datenverarbeitung, insbesondere ein Smartphone, aufweisend Mittel, die dazu eingerichtet sind, ein Verfahren gemäß dem ersten Aspekt der Erfindung auszuführen, vorgeschlagen.

Alle Vorteile, die in Bezug auf das Verfahren gemäß dem ersten Aspekt der Erfindung beschrieben wurden, gelten dabei entsprechend auch für die Vorrichtung zur Datenverarbeitung gemäß dem zweiten Aspekt der Erfindung. Daher kann insoweit an dieser Stelle auf die vorherigen Ausführungen verwiesen werden.

Die Merkmale, die in Bezug auf das Verfahren gemäß dem ersten Aspekt der Erfindung beschrieben wurden, und dort insbesondere in Bezug auf die Erfassungseinheit, können dabei auch bei der Vorrichtung zur Datenverarbeitung entsprechend vorgesehen sein, einzeln und in beliebiger Kombination, sofern sich aus dem Zusammenhang nichts anderes ergibt.

Insbesondere können die im Zusammenhang mit dem Verfahren gemäß dem ersten Aspekt der Erfindung beschriebenen körperlichen und funktionalen Ausgestaltungen der einzelnen Teile, insbesondere der Erfassungseinheit, auch bei der Vorrichtung zur Datenverarbeitung gemäß dem zweiten Aspekt entsprechend vorgesehen sein, einzeln und in beliebiger Kombination, sofern sich aus dem Zusammenhang nichts anderes ergibt. Beispielsweise kann die Vorrichtung zur Datenverarbeitung gerade der Erfassungseinheit aus dem Verfahren gemäß dem ersten Aspekt der Erfindung entsprechen.

Die Mittel der Vorrichtung zur Datenverarbeitung sind dabei insbesondere in Hardware, in Software oder als eine Kombination aus beidem ausgebildet. Die Vorrichtung zur Datenverarbeitung kann alternativ oder ergänzend einen Speicher, einen Prozessor, eine Empfangseinrichtung, eine Sendeeinrichtung (jeweils für die Funksignale) oder eine beliebige Kombination davon aufweisen. Die Vorrichtung zur Datenverarbeitung kann alternativ oder ergänzend alles, was von dieser aufgewiesen ist, wie insbesondere alle notwendigen Ressourcen, beispielsweise in Form von Software- und/oder Hardwareressourcen, bereitstellen und/oder verfügbar machen und/oder aufweisen. Insbesondere weist die Vorrichtung zur Datenverarbeitung einen GPS-Sensor und/oder eine Funkschnittstelle auf, wie dies weiter oben zu dem Verfahren bereits beschrieben wurde.

Insbesondere weist die Vorrichtung zur Datenverarbeitung Schnittstellen zum Empfangen der jeweiligen Signale, wie den Funksignalen von/an die Ausrüstungsgegenstände und/oder von/an das Fahrzeug, und/oder Mittel zum Verarbeiten, Auswerten und/oder Analysieren der jeweiligen Signale auf.

Ferner wird ein computerlesbares Speichermedium, umfassend Befehle, die bei der Ausführung durch eine Vorrichtung zur Datenverarbeitung, insbesondere eine Vorrichtung zur Datenverarbeitung gemäß dem zweiten Aspekt der Erfindung, diese veranlassen, ein Verfahren gemäß dem ersten Aspekt der Erfindung auszuführen, vorgeschlagen.

Ferner wird ein Computerprogrammprodukt vorgeschlagen, umfassend Befehle, die bei der Ausführung des Programms durch eine Vorrichtung zur Datenverarbeitung, insbesondere eine Vorrichtung zur Datenverarbeitung gemäß dem zweiten Aspekt der Erfindung, diese veranlassen, ein Verfahren gemäß dem ersten Aspekt der Erfindung auszuführen.

Das Computerprogrammprodukt kann als eine, insbesondere auf einem computerlesbaren Medium (etwa in Form einer CD, DVD, ROM/RAM, Blue-Ray-Disc, USB-Speicher, SSD-Speicher, magnetische Festplatte, und/oder dergleichen) gespeicherte oder speicherbare und/oder aus einem Computernetzwerk (wie dem Internet) herunterladbare, Datei ausgestaltet sein. Die Datei kann dann beispielsweise, insbesondere auf einer Vorrichtung zur Datenverarbeitung, wie die Vorrichtung zur Datenverarbeitung gemäß dem zweiten Aspekt, ausführbar sein, um das Verfahren ausführen zu können.

Ferner wird ein Datenträgersignal, das ein Computerprogrammprodukt überträgt, vorgeschlagen. Das Datenträgersignal kann beispielsweise über ein Computernetzwerk, wie dem Internet, übertragbar sein. Beispielsweise kann das Datenträgersignal das Computerprogrammprodukt als eine aus dem Computernetzwerk herunterladbare Datei repräsentieren. Das Datenträgersignal kann beispielsweise auf einem Datenträger gespeichert sein und/oder im Internet zum Download angeboten werden.

In einem dritten Aspekt der Erfindung wird eine Signalfolge, repräsentierend Befehle, die, wenn sie auf einer Vorrichtung zur Datenverarbeitung, insbesondere der Vorrichtung zur Datenverarbeitung gemäß dem zweiten Aspekt der Erfindung, ausgeführt werden, die Vorrichtung zur Datenverarbeitung veranlassen, ein Verfahren gemäß dem ersten Aspekt der Erfindung auszuführen, vorgeschlagen.

Alle Vorteile, die in Bezug auf das Verfahren gemäß dem ersten Aspekt der Erfindung beschrieben wurden, gelten dabei entsprechend auch für diesen Aspekt der Erfindung. Daher kann insoweit an dieser Stelle auf die vorherigen Ausführungen verwiesen werden.

Die Signalfolge kann beispielsweise über ein Computernetzwerk, wie dem Internet, übertragbar sein. Beispielsweise kann die Signalfolge das Computerprogrammprodukt repräsentieren, insbesondere als aus dem Computernetzwerk herunterladbare Datei.

Die Signalfolge kann beispielsweise auf einem Datenträger gespeichert sein und/oder im Internet zum Download angeboten werden.

Ferner wird eine Kommunikationsschnittstelle, insbesondere aufweisend oder darstellend einen Bluetooth-fähigen Chip und/oder einen RFID-Transponder, die von einem Gegenstand umfassbar, an diesem vorsehbar und/oder diesem zuordenbar ist, in der Informationen zu dem Gegenstand hinterlegt oder hinterlegbar sind und/oder der mit einer Vorrichtung zur Datenverarbeitung gemäß dem zweiten Aspekt der Erfindung und/oder in einem Verfahren gemäß dem ersten Aspekt der Erfindung mit der dortigen Erfassungseinheit jeweils in eine funkbasierte Wirkverbindung bringbar ist, vorgeschlagen. Dadurch kann ein Gegenstand in einem Verfahren gemäß dem ersten Aspekt der Erfindung und/oder mit einer Vorrichtung zur Datenverarbeitung gemäß dem zweiten Aspekt der Erfindung sehr zuverlässig durch eine entsprechende Beladungskontrolle als Ausrüstungsgegenstand überwacht werden.

Ferner wird ein Gegenstand, insbesondere aufweisend zumindest eine Kommunikationsschnittstelle, vorgeschlagen, wobei der Gegenstand in einem Verfahren gemäß dem ersten Aspekt der Erfindung und/oder mittels einer Vorrichtung zur Datenverarbeitung gemäß dem zweiten Aspekt der Erfindung als Ausrüstungsgegenstand erfassbar ist. Dadurch kann der Gegenstand in einem Verfahren gemäß dem ersten Aspekt der Erfindung und/oder mit einer Vorrichtung zur Datenverarbeitung gemäß dem zweiten Aspekt der Erfindung sehr zuverlässig durch eine entsprechende Beladungskontrolle als Ausrüstungsgegenstand überwacht werden.

### Figuren

Weitere Merkmale und Vorteile der Erfindung ergeben sich aus der nachfolgenden Beschreibung, in der im Einzelnen beschriebene Ausführungsformen der Erfindung anhand schematischer Zeichnungen erläutert werden. Dabei zeigen:
- Fig. 1: eine schematische Darstellung eines Lagerbereichs eines Unternehmens;
- Fig. 2: eine schematische Darstellung eines Straßenbereichs;
- Fig. 3: ein Ablaufdiagramm eines Ausführungsbeispiels eines Verfahrens zur Überwachung einer Beladung eines Fahrzeugs mit Ausrüstungsgegenständen;
- Fig. 4a: eine Bildschirmansicht mit Einträgen aus einem Ausrüstungsgegenstand-Verzeichnis; und
- Fig. 4b: die Bildschirmansicht aus Fig. 4a mit einem hervorgehobenen Eintrag.

### Beschreibung der Ausführungsbeispiele

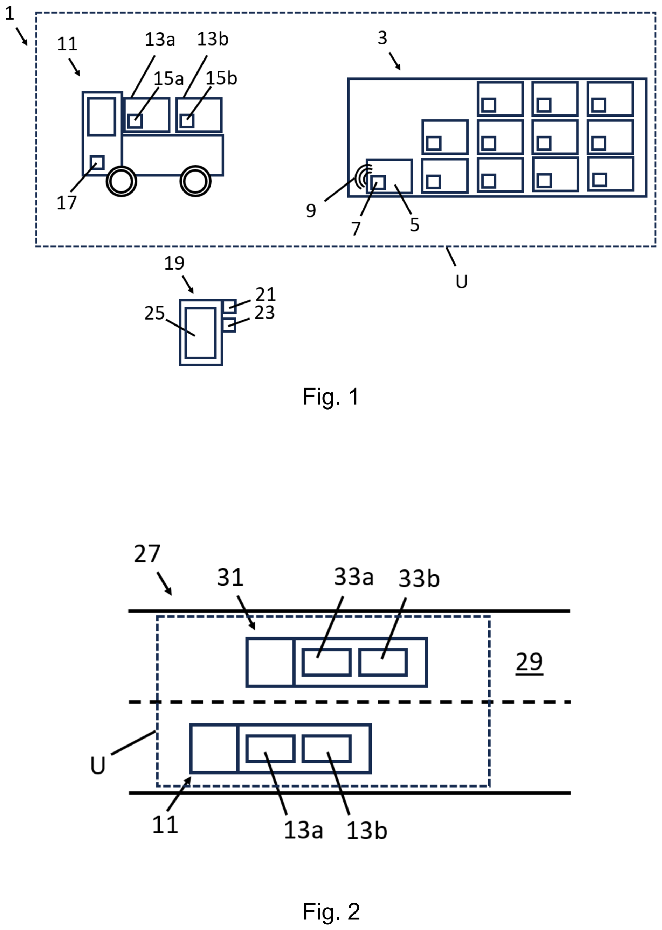

Fig. 1 zeigt eine schematische Darstellung eines Lagerbereichs 1 eines Unternehmens, etwa eines Garten- und Landschaftsbauunternehmens.

Insoweit ist in dem Lagerbereich 1 der Fig. 1 ein Lager 3 mit einer Vielzahl von darin gelagerten Ausrüstungsgegenständen 5 dargestellt. Jeder Ausrüstungsgegenstand 5 ist mit einer Kommunikationsschnittstelle 7, insbesondere in Form eines Tags, versehen und/oder weist die Kommunikationsschnittstelle 7 auf. Der Übersichtlichkeit halber ist in Fig. 1 nur ein einziger Ausrüstungsgegenstand 5 und dessen Kommunikationsschnittstelle 7 von den in dem Lager 3 vorgesehenen Ausrüstungsgegenständen mit Bezugszeichen versehen.

In jeder Kommunikationsschnittstelle 7 ist eine einmalige Kennung hinterlegt, die dem jeweiligen Ausrüstungsgegenstand 5 zugeordnet ist. Die Kommunikationsschnittstelle 7 sendet die Kennung mittels eines entsprechend kodierten Funksignals 9 aus. Daher können die Kennungen der Ausrüstungsgegenstände 5 durch Empfangen und Auswerten der jeweiligen Funksignale 9 erhalten werden. Die Kommunikationsschnittstelle 7 weist beispielsweise einen Bluetooth-Chipsatz auf, der kontinuierlich oder periodisch das besagte Funksignal 9 aussendet. Alternativ kann die Kommunikationsschnittstelle 7 auch ein RFID-Transponder sein. Im Fall eines passiven RFID-Transponders kann dieser durch ein Funksignal aktiviert werden, um daraufhin das besagte Funksignal 9 auszusenden.

In dem Lagerbereich 1 der Fig. 1 ist außerdem ein Fahrzeug 11 dargestellt. An Bord des Fahrzeugs 11 sind mehrere Ausrüstungsgegenstände 13a und 13b samt den jeweiligen Kommunikationsschnittstellen 15a und 15b, die insbesondere in Form von Tags ausgebildet sind. In der Fig. 1 sind lediglich der Ausrüstungsgegenstand 13a mit der diesem zugeordneten Kommunikationsschnittstelle 15a und der Ausrüstungsgegenstand 13b mit der diesem zugeordneten Kommunikationsschnittstelle 15b dargestellt, wenngleich weitere Ausrüstungsgegenstände mit jeweils zugeordneten Kommunikationsschnittstellen an Bord des Fahrzeugs 11 vorgesehen sein können. An dem Fahrzeug 11 selbst ist ein Tag 17 vorgesehen. Der Tag 17 funktioniert ganz ähnlich wie die Kommunikationsschnittstellen 7, 15a und 15b der Ausrüstungsgegenstände 5, 13a und 13b und ist ganz ähnlich wie diese aufgebaut. Die von dem Tag 17 ausgesendete Kennung ist jedoch dem Fahrzeug 11 zugeordnet. Dadurch kann die Kennung des Fahrzeugs 11 durch Empfangen und Auswerten des von dem Tag 17 ausgesendeten Funksignals erhalten werden.

Fig. 1 zeigt weiterhin eine Erfassungseinheit 19. Die Erfassungseinheit 19 weist eine Funkschnittstelle 21 auf. Über die Funkschnittstelle 21 können die von den Kommunikationsschnittstellen 7, 15a und 15b ausgesendeten Funksignale 9 genauso empfangen werden, wie die von dem Tag 17 ausgesendeten Funksignale. Dazu ist die Funkschnittstelle 21 für das Empfangen von Funksignalen entsprechend ausgebildet. Optional kann die Funkschnittstelle 21 auch Funksignale aussenden, so dass damit beispielsweise die in Reichweite des Funksignals geladenen Kommunikationsschnittstellen bzw. Tags 7, 15a, 15b und 17 aktiviert und veranlasst werden können, ihrerseits jeweils ein mit der jeweiligen Kennung kodiertes Funksignal 9 auszusenden. Dazu ist die Funkschnittstelle 21 für das Senden von Funksignalen entsprechend ausgebildet.

Die Erfassungseinheit 19 weist auch einen GPS-Sensor 23 auf. Mit dem GPS-Sensor 23 können GPS-Positionsinformationen empfangen werden. Außerdem weist die Erfassungseinheit 17 auch zumindest ein Ausgabemittel 25, etwa einen Bildschirm, einen Lautsprecher und/oder einen Vibrationsaktor, auf, auf bzw. mit dem Informationen an eine Bedienperson ausgegeben werden können. Die Erfassungseinheit 19 weist darüber hinaus in Fig. 1 nicht näher dargestellte Ressourcen auf, etwa Speichermittel, sowie solche, um Signale zu erzeugen und empfangene Signale auszuwerten. Die Erfassungseinheit 19 kann beispielsweise ein Smartphone sein.

Die in Fig. 1 dargestellte Situation kann beispielsweise zu Beginn eines Arbeitstages bestehen. Hier werden für die bevorstehenden Arbeitseinsätze unterschiedliche Teams gebildet, die auf unterschiedliche Fahrzeuge (einschließlich des Fahrzeugs 11) des Unternehmens verteilt werden. Die einzelnen Fahrzeuge werden dabei mit den für die jeweiligen Teams eingeplanten Arbeitseinsätze benötigten Ausrüstungsgegenständen beladen. Nach dem Beladevorgang verlassen die Fahrzeuge das Unternehmensgelände in Richtung einzelner Einsatzorte. Beispielsweise kann also das Fahrzeug 11 mit den Ausrüstungsgegenständen 13a und 13b aus dem Lager 3 beladen worden sein und sich dazu in dem Lagerbereich 1 befinden.

Fig. 2 zeigt eine schematische Darstellung eines Straßenbereichs 27.

Der Straßenbereich 27 kann eine Ausfahrt des Unternehmens sein. Insoweit sind in dem Straßenbereich 27 der Fig. 2 eine zweispurige Straße 29 mit dem Fahrzeug 11 aus Fig. 1 dargestellt. Das Fahrzeug 11 befindet sich mit den Ausrüstungsgegenständen 13a und 13b an Bord beispielsweise auf dem Weg von dem Lagerbereich 1 zu einem entfernten Einsatzort. Ebenfalls an Bord des Fahrzeugs 11 ist die (in Fig. 2 nicht dargestellte) Erfassungseinheit 19 zusammen mit der Bedienperson und dem übrigen Team. Außerdem befindet sich in der Nachbarschaft zu dem Fahrzeug 11 auch ein anderes Fahrzeug 31 auf der Straße 29, das ebenfalls mehrere Ausrüstungsgegenstände 33a, 33b, die jeweils (in Fig. 2 nicht dargestellte) Kommunikationsschnittstellen aufweisen, an Bord hat und auf dem Weg zu einem anderen Einsatzort ist.

Nach einem erledigten Arbeitseinsatz muss jeweils sichergestellt werden, dass alle Ausrüstungsgegenstände wieder an Bord des Fahrzeugs 11 sind. Um dies zu realisieren, kann zur Überwachung der Beladung des Fahrzeugs 11 mit Ausrüstungsgegenständen ein Verfahren gemäß dem ersten Aspekt der Erfindung eingesetzt werden.

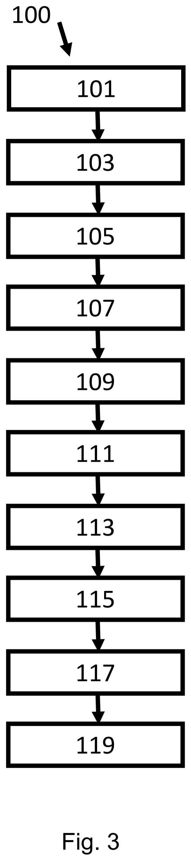

Fig. 3 zeigt ein Ablaufdiagramm eines Verfahrens 100 zur Überwachung einer Beladung eines Fahrzeugs mit Ausrüstungsgegenständen gemäß dem ersten Aspekt der Erfindung.

Das Team des Fahrzeugs 11 trägt die Erfassungseinheit 19 bei sich, beispielsweise trägt eine Person des Teams die Erfassungseinheit 19 in Form eines Smartphones bei sich. Wenn das Team zu Beginn des Arbeitstages zu dem Fahrzeug 11 mit den an Bord geladenen Ausrüstungsgegenständen 13a und 13b kommt, gelangt damit auch die Erfassungseinheit 19 in die Nähe des Fahrzeugs 11, so dass daraufhin die von dem Tag 17 des Fahrzeugs ausgesendeten Funksignale mit der Erfassungseinheit 19 empfangen werden. Indem die Erfassungseinheit 19 die empfangenen Funksignale auswertet, kann es die darin kodierte Kennung des Fahrzeugs 9 erhalten und in Verfahrensschritt 101 zu einem ersten Zeitpunkt die Anwesenheit des Fahrzeugs 9 in einer Umgebung U der Erfassungseinheit 19 feststellen. Beispielsweise kann die Umgebung U der Erfassungseinheit 19 ein Raumbereich sein, innerhalb dessen sich Kommunikationsschnittstellen und Tags befinden müssen, damit die Erfassungseinheit 19 die von diesen ausgesendeten Funksignalen empfangen kann.

Wenn das Team anschließend mit dem Fahrzeug 11 den Lagerbereich 1 verlässt, empfängt die Erfassungseinheit 19 die Funksignale 9 von den an Bord des Fahrzeugs 11 geladenen Ausrüstungsgegenständen 13a und 13b sowie gegebenenfalls von Ausrüstungsgegenständen, die sich beispielsweise an Bord eines benachbarten Fahrzeugs und damit weiterhin, erneut oder erstmalig in einer Umgebung U der Erfassungseinheit 19 befinden. In der wie die in Bezug auf Fig. 2 beschriebene Situation können dies die Funksignale 9 von den an Bord des Fahrzeugs 31 geladenen Ausrüstungsgegenständen 33a, 33b sein, die weiterhin, erneut oder erstmalig anhand der Funksignale 9 als anwesend erfasst werden.

Nachdem sich das Fahrzeug 11 weit genug von dem Unternehmensgelände entfernt hat, empfängt die Erfassungseinheit 19 nur noch die Funksignale 9 von den an Bord des Fahrzeugs 11 geladenen Ausrüstungsgegenständen 13a und 13b.

Während das Fahrzeug 11 weiter in Richtung dessen Einsatzort fährt, wird in Verfahrensschritt 103 zu einem zweiten Zeitpunkt festgestellt, dass sich das Fahrzeug 11 um eine vorgegebene Entfernung von dem Unternehmensgelände entfernt hat. Die Entfernung des Fahrzeugs 11 von einer Referenzposition ist insoweit eine erste Zustandsgröße des Fahrzeugs 11 und die +vorgegebene Entfernung ein spezifischer Wert dieser ersten Zustandsgröße. Wenn vorliegend die erste Zustandsgröße einen Wert annimmt, der größer als der spezifische Wert ist, wird dies als Eintritt eines ersten Ereignisses wie beschrieben entsprechend festgestellt.

Die aktuelle Ortsinformation des Fahrzeugs 11 wird dabei mit dem GPS-Sensor 23 ermittelt. Hierbei wird die Position der Erfassungseinheit 19 als die Position des Fahrzeugs 11 betrachtet. Der Ort des Lagers 3 ist dabei die Referenzposition.

In Reaktion auf den festgestellten Eintritt des ersten Ereignisses, wird in Verfahrensschritt 105 auf die Anwesenheit von Ausrüstungsgegenständen mittels der der Erfassungseinheit 19 in einer Umgebung U der Erfassungseinheit 19 geprüft.

Alle Ausrüstungsgegenstände, die dabei von der Erfassungseinheit 19 als anwesend erfasst werden, werden in Verfahrensschritt 107 als für die Beladung des Fahrzeugs 11 spezifische Ausrüstungsgegenstände identifiziert und automatisiert in ein Ausrüstungsgegenstand-Verzeichnis eingetragen. Zudem kann vorgesehen sein, dass die einzelnen Funksignale in Ausführungsformen jeweils eine Mindestsignalstärke aufweisen müssen, um überhaupt berücksichtigt zu werden.

Für die Feststellung der Anwesenheit eines Ausrüstungsgegenstandes genügt es dabei prinzipiell, dass die Kennung, die in der dem Ausrüstungsgegenstand zugeordneten oder von dem Ausrüstungsgegenstand aufgewiesenen Kommunikationsschnittstelle hinterlegt ist, durch Empfangen und Auswerten des jeweiligen Funksignals erhalten wird. Wenn daher davon gesprochen wird, dass ein bestimmter Ausrüstungsgegenstand als anwesend erfasst wird, so ist damit vorliegend gemeint, dass das Funksignal derjenigen Kommunikationsschnittstelle, die an dem bestimmten Ausrüstungsgegenstand vorgesehen ist, empfangen und die Kennung durch Auswertung des Funksignals erhalten wird.

Durch die angewandten Kriterien kann zuverlässig vermieden werden, dass mittels der Erfassungseinheit 19 Ausrüstungsgegenstände in einer Umgebung U der Erfassungseinheit 19 als anwesend erfasst werden, obwohl sich diese gar nicht an Bord des Fahrzeugs 11 befinden. Denn zum einen muss zunächst die Anwesenheit des Fahrzeugs 11 festgestellt werden. Dadurch kann ein Start eines Beladevorgangs und/oder ein Start einer Tour erkannt werden. Zum anderen hat sich durch die passende Wahl des spezifischen Wertes der ersten Zustandsgröße das Fahrzeug 11 zum Zeitpunkt des festgestellten Eintritts des ersten Ereignisses weit genug von einer Referenzposition (hier das Lager 3) entfernt, so dass sich die dort gelagerten Ausrüstungsgegenstände 5 nicht mehr in der Umgebung U der Erfassungseinheit 19 befinden und damit nicht mehr als anwesend erfasst werden. Gleiches gilt entsprechend für die Ausrüstungsgegenstände 33a, 33b, die sich an Bord des anderen Fahrzeugs 31 befinden, das zum Zeitpunkt des festgestellten Eintritts des ersten Ereignisses ebenfalls außerhalb der Umgebung U der Erfassungseinheit 19 ist.

Dadurch können zuverlässig diejenigen Ausrüstungsgegenstände 13a, 13b als anwesend erkannt und als spezifische Ausrüstungsgegenstände identifiziert und in das Ausrüstungsgegenstand-Verzeichnis eingetragen werden, die sich auch tatsächlich als Ausrüstungsgegenstände 13a und 13b an Bord des Fahrzeugs 11 befinden. Dadurch kann zuverlässig bewirkt werden, dass Ausrüstungsgegenstände, die sich nur zeitweise in einer Umgebung U der Erfassungseinheit 19 befinden, etwa weil sich diese im Lager 3 oder auf dem zeitweise benachbarten Fahrzeug 31 befinden, nicht berücksichtigt werden. Indem außerdem optional auch die Signalstärke der Funksignale 9 ausgewertet wird, können Ausrüstungsgegenstände, die sich weit entfernt von der Erfassungseinheit 19 und daher mutmaßlich ohnehin nicht an Bord des Fahrzeugs 11 befinden, unberücksichtigt bleiben.

Damit werden alle Ausrüstungsgegenstände 13a, 13b, die sich an Bord des Fahrzeugs 11 befinden, automatisiert als spezifische Ausrüstungsgegenstände identifiziert und in das Ausrüstungsgegenstand-Verzeichnis eingetragen.

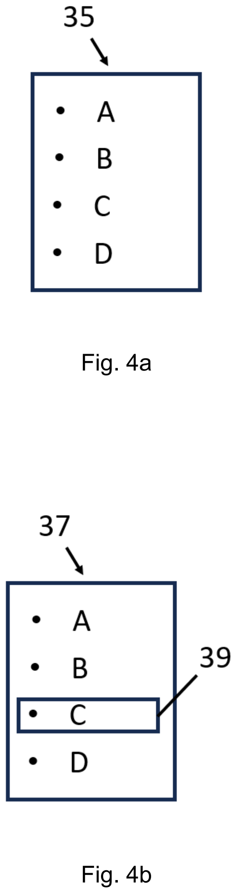

Das Ausrüstungsgegenstand-Verzeichnis kann optional in Verfahrensschritt 109 auf der Erfassungseinheit 19, insbesondere auf dem Ausgabemittel 25, ausgegeben werden. Fig. 4a zeigt eine entsprechende Bildschirmansicht 35 mit zumindest einigen der Einträge (A bis D) aus dem Ausrüstungsgegenstand-Verzeichnis. Die Anzahl und Art der in der Bildschirmansicht 35 dargestellten Einträge dient nur der Illustration.

Nach Abschluss des Einsatzes an einem Einsatzort und nachdem die ursprünglich geladenen Arbeitsgegenstände 13a, 13b wieder an Bord des Fahrzeugs 11 verbracht wurden, verlässt das Team den jeweiligen Einsatzort wieder. Dabei wird die Anwesenheit des Fahrzeugs 11 anhand der Funksignale, die von dessen Tag 17 ausgesendet werden, in Verfahrensschritt 111 zu einem dritten Zeitpunkt festgestellt. Anschließend wird nach einer gewissen Zeit in Verfahrensschritt 113 zu einem vierten Zeitpunkt festgestellt, dass sich das Fahrzeug 11 um eine bestimmte Entfernung von dem Einsatzort, der als neue Referenzposition dient, entfernt hat. Die Entfernung des Fahrzeugs 11 von der neuen Referenzposition ist insoweit eine zweite Zustandsgröße des Fahrzeugs 11 und die vorgegebene Entfernung ein spezifischer Wert dieser zweiten Zustandsgröße. Wenn vorliegend die zweite Zustandsgröße einen Wert annimmt, der größer als der spezifische Wert ist, wird dies als Eintritt eines zweiten Ereignisses wie beschrieben entsprechend festgestellt. In Reaktion darauf wird in Verfahrensschritt 115 mittels der Erfassungseinheit 19 geprüft, ob Funksignale von allen in dem Ausrüstungsgegenstand-Verzeichnis eingetragenen spezifischen Ausrüstungsgegenständen 13a, 13b empfangen werden. Dadurch wird mithin geprüft, ob die spezifischen Ausrüstungsgegenstände 13a, 13b wieder an Bord des Fahrzeugs 11 sind.

Dazu wird beispielsweise das Ausrüstungsgegenstand-Verzeichnis Eintrag für Eintrag durchgegangen und für jeden Eintrag geprüft, ob ein Funksignal empfangen wird, in dem die Kennung des jeweiligen Ausrüstungsgegenstandes kodiert ist. Beispielsweise kann jeder Eintrag die Kennung des zugehörigen Ausrüstungsgegenstandes aufweisen oder darstellen.

Im Rahmen dieser Überprüfungsphase lassen sich etwaige fehlende Ausrüstungsgegenstände erkennen. In Verfahrensschritt 117 wird dazu ein erstes Kontrollsignal erzeugt. Dieses erste Kontrollsignal kann beispielsweise einen etwaigen nicht als anwesend erfassten und daher einen fehlenden spezifische Ausrüstungsgegenstand identifizierbar machen.

Das Ausrüstungsgegenstand-Verzeichnis kann optional in Verfahrensschritt 119 auf der Erfassungseinheit 19, insbesondere auf dem Ausgabemittel 25, ausgegeben werden und es können darin die fehlenden spezifischen Ausrüstungsgegenstände hervorgehoben werden. Zusätzlich oder alternativ kann eine Ausgabe auf einem Display des Fahrzeugs vorgesehen sein. Fig. 4b zeigt eine entsprechende Bildschirmansicht 37, bei der ein zu dem fehlenden Ausrüstungsgegenstand gehöriger Eintrag des Ausrüstungsgegenstand-Verzeichnisses durch eine Umrandung 39 exemplarisch hervorgehoben ist. Zusätzlich oder alternativ kann vorgesehen sein, den zu dem fehlenden Ausrüstungsgegenstand gehörigen Eintrag des Ausrüstungsgegenstand-Verzeichnisses auszugeben, wobei vorteilhafterweise als anwesend erfasste Ausrüstungsgegenstände nicht ausgegeben werden.

Auf diese Weise kann das Team zuverlässig darüber informiert werden, wenn die Beladung des Fahrzeugs 11 beim Verlassen des Einsatzortes nicht vollständig ist.

Mit dem Verfahren gemäß dem ersten Aspekt der Erfindung kann also die Beladung des Fahrzeugs 11 mit Ausrüstungsgegenständen 13a, 13b besonders zuverlässig und automatisiert überwacht werden. Ein manueller Eingriff, etwa während der Erfassungsphase, ist nicht notwendig, und das Ausrüstungsgegenstand-Verzeichnis kann ohne Zutun einer Person erstellt werden.

Die beschriebene Erfassungseinheit 19 kann dabei eine Vorrichtung zur Datenverarbeitung gemäß dem zweiten Aspekt der Erfindung sein. Dazu weist die Erfassungseinheit 19 Mittel auf, die dazu eingerichtet sind, das beschriebene Verfahren auszuführen. Jede der beschriebenen Kommunikationsschnittstellen bzw. Tags 7, 15a, 15b, 17 kann jeweils eine Kommunikationsschnittstelle bzw. Tag sein. Jeder der beschriebenen Ausrüstungsgegenstände 5, 13a, 13b, 33a, 33b kann jeweils ein Gegenstand sein.

Die in der vorangehenden Beschreibung, in den Zeichnungen und in den Ansprüchen offenbarten Merkmale können sowohl einzeln als auch in beliebiger Kombination wesentlich für die Erfindung in ihren verschiedenen Ausführungsformen sein.

## Patentansprüche

1. Verfahren zur Überwachung einer Beladung eines Fahrzeugs (11) mit Ausrüstungsgegenständen (5, 13a, 13b), umfassend die Verfahrensschritte:
a) Feststellen eines Eintritts eines ersten Ereignisses hinsichtlich einer in Bezug auf das Fahrzeug (11) definierten ersten Zustandsgröße mittels einer Erfassungseinheit (19), wobei die Erfassungseinheit (19) zum Erfassen von Funksignalen (9) eingerichtet ist,
b) Prüfen auf eine Anwesenheit von Ausrüstungsgegenständen (5, 13a, 13b) mittels der Erfassungseinheit (19) als Reaktion auf den festgestellten Eintritt des ersten Ereignisses,
c) Identifizieren zumindest eines als anwesend erfassten Ausrüstungsgegenstands als ein für die Beladung des Fahrzeugs (11) spezifischer Ausrüstungsgegenstand (13a, 13b),
d) Feststellen eines Eintritts eines zweiten Ereignisses hinsichtlich einer in Bezug auf das Fahrzeug (11) definierten zweiten Zustandsgröße,
e) Prüfen auf eine Anwesenheit zumindest des spezifischen Ausrüstungsgegenstands (13a, 13b) mittels der Erfassungseinheit als Reaktion auf den festgestellten Eintritt des zweiten Ereignisses,
f) Erzeugen eines ersten Kontrollsignals in Abhängigkeit eines Ergebnisses des Prüfens auf die Anwesenheit des spezifischen Ausrüstungsgegenstands.

2. Verfahren nach Anspruch 1, umfassend den weiteren Verfahrensschritt:
- Feststellen einer Anwesenheit des Fahrzeugs (11), insbesondere funkbasiert, mittels der Erfassungseinheit (19), insbesondere in einer Umgebung der Erfassungseinheit (U), zeitlich vor dem Feststellen des Eintritts des ersten Ereignisses.

3. Verfahren nach einem der vorangehenden Ansprüche, umfassend den weiteren Verfahrensschritt:
- Hinterlegen einer Information über den spezifischen Ausrüstungsgegenstand (13a, 13b) in einem Ausrüstungsgegenstand-Verzeichnis als Reaktion auf das Identifizieren des für die Beladung des Fahrzeugs (11) spezifischen Ausrüstungsgegenstands (13a, 13b).

4. Verfahren nach einem der vorangehenden Ansprüche, umfassend den weiteren Verfahrensschritt:
- Feststellen der Anwesenheit des Fahrzeugs (11), insbesondere funkbasiert, mittels der Erfassungseinheit (19), insbesondere in einer Umgebung der Erfassungseinheit (U), zeitlich vor dem Feststellen des Eintritts des zweiten Ereignisses.

5. Verfahren nach einem der vorangehenden Ansprüche, wobei das Prüfen auf die Anwesenheit von Ausrüstungsgegenständen (5, 13a, 13b) in Schritt b) aufweist, dass zumindest ein Ausrüstungsgegenstand (5, 13a, 13b) zu zumindest einem Zeitpunkt als anwesend erfasst wird und/oder von den in Schritt b) zumindest zeitweise als anwesend erfassten Ausrüstungsgegenständen (5, 13a, 13b) zumindest einer derjenigen Ausrüstungsgegenstände, die in Schritt b) wiederholt zu mehreren Zeitpunkten als anwesend erfasst werden, in Schritt c) als der spezifische Ausrüstungsgegenstand (13a, 13b) identifiziert wird.

6. Verfahren nach einem der vorangehenden Ansprüche, wobei in Schritt b) mittels der Erfassungseinheit (19), insbesondere funkbasiert, insbesondere in periodischen Abständen, wiederholt, insbesondere jeweils wenn sich eine Position des Fahrzeugs (11) um einen vordefinierten Wert seit der letzten Prüfung verändert hat, auf die Anwesenheit von Ausrüstungsgegenständen (5, 13a, 13b), insbesondere in einer Umgebung der Erfassungseinheit (U), geprüft wird.

7. Verfahren nach einem der vorangehenden Ansprüche, wobei in Schritt c) das Identifizieren des spezifischen Ausrüstungsgegenstandes (13a, 13b) zumindest teilweise basierend auf einer Auswertung einer Signalstärke eines Funksignals (9) durchgeführt wird, wobei insbesondere ein, insbesondere als anwesend erfasster, Ausrüstungsgegenstand (5, 13a, 13b) nicht als spezifischer Ausrüstungsgegenstand (13a, 13b) identifiziert wird, wenn das Funksignal (9) in Schritt b) eine Signalstärke geringer als ein unterer Grenzwert aufweist.

8. Verfahren nach einem der vorangehenden Ansprüche, wobei ein, insbesondere zumindest zeitweise als anwesend erfasster, Ausrüstungsgegenstand (5, 13a, 13b) nicht als spezifischer Ausrüstungsgegenstand (13a, 13b) identifiziert wird, wenn ein Funksignal (9) in Schritt b) für eine Dauer größer als und/oder gleich wie ein definierter unterer Grenzwert nicht empfangen wird.

9. Verfahren nach einem der vorangehenden Ansprüche, wobei in Schritt c) das Identifizieren des spezifischen Ausrüstungsgegenstandes (13a, 13b) zumindest teilweise basierend auf einer Auswertung eines Signalinhalts eines Funksignals (9) durchgeführt wird, wobei insbesondere ein, insbesondere als anwesend erfasster, Ausrüstungsgegenstand (5, 13a, 13b) nicht als spezifischer Ausrüstungsgegenstand (13a, 13b) identifiziert wird, wenn der Signalinhalt des Funksignals (9) in Schritt b) nicht einem definierten Schema entspricht.

10. Verfahren nach einem der vorangehenden Ansprüche, wobei der Schritt e) aufweist, dass mittels der Erfassungseinheit (19), insbesondere funkbasiert, auf die Anwesenheit wenigstens des in Schritt c) identifizierten spezifischen Ausrüstungsgegenstandes (13a, 13b) und/oder wenigstens der in dem Ausrüstungsgegenstand-Verzeichnis eingetragenen spezifischen Ausrüstungsgegenstände (13a, 13b), insbesondere in einer Umgebung der Erfassungseinheit (U), geprüft wird, wobei insbesondere jeder dabei als nicht anwesend festgestellte spezifische Ausrüstungsgegenstand als fehlender Ausrüstungsgegenstand identifiziert wird und/oder das in Schritt f) erzeugte erste Kontrollsignal indikativ ist für den oder die fehlenden Ausrüstungsgegenstände.

11. Verfahren nach einem der vorangehenden Ansprüche, wobei der in Schritt a) festgestellte Eintritt des ersten Ereignisses hinsichtlich der in Bezug auf das Fahrzeug (11) definierten ersten Zustandsgröße ist, dass ein Wert der ersten Zustandsgröße einen ersten spezifischen Wert aufweist oder diesem entspricht, überschreitet und/oder unterschreitet.

12. Vorrichtung zur Datenverarbeitung, insbesondere ein Smartphone, aufweisend Mittel, die dazu eingerichtet sind, das Verfahren nach einem der Ansprüche 1 bis 11 auszuführen.

13. Signalfolge, repräsentierend Befehle, die, wenn sie auf einer Vorrichtung zur Datenverarbeitung, insbesondere der Vorrichtung zur Datenverarbeitung nach Anspruch 12, ausgeführt werden, die Vorrichtung zur Datenverarbeitung veranlassen, das Verfahren nach einem der Ansprüche 1 bis 11 auszuführen.
